# EUROPEAN PATENT APPLICATION

(11) **EP 4 770 264 A1**
(43) Date of publication of application: **01.07.2026**
(21) Application number: 24870131.0
(22) Date of filing: 09.08.2024
(51) Int. Cl.: H04W 76/30

(54) **INFORMATION PROCESSING METHOD, TERMINAL DEVICE, AND CHIP SYSTEM**

(30) Priority: 28.09.2023 CN 202311290534
(71) Applicant: Honor Device Co., Ltd., Shenzhen 518040 (CN)
(72) Inventor: LI, Haibo, Shenzhen 518040 (CN)
(74) Representative: Gill Jennings & Every LLP
(86) International application number: PCT/CN2024/111224
(87) International publication number: WO 2025/066583

(57) **Abstract**

This application discloses an information processing method, a terminal device, and a chip system, and pertains to the field of communication technologies. The method includes: receiving a first message that is sent by a network side and that carries a quality of service class identifier and first indication information, where the first message is used to indicate to create a first bearer, and the first indication information is used to indicate that a to-be-created bearer has target bearer configuration information; and sending a first response message to the network side; receiving a second message that is sent by the network side and that carries the service quality class identifier, where the second message further carries second indication information or does not carry the first indication information and the second indication information, the second message is used to indicate to delete the first bearer, and the second indication information is used to indicate that the to-be-deleted bearer does not have the target bearer configuration information; and deleting the target bearer configuration information of the first bearer in response to the second message. In this way, when a network exception occurs, impact on a terminal service can be reduced, thereby improving stability and reliability of the terminal service.

## Description

This application claims priority to Chinese Patent Application No. 202311290534.8, filed with the China National Intellectual Property Administration on September 28, 2023 and entitled "INFORMATION PROCESSING METHOD, TERMINAL DEVICE, AND CHIP SYSTEM", which is incorporated herein by reference in its entirety.

### TECHNICAL FIELD

This application relates to the field of communication technologies, and in particular, to an information processing method, a terminal device, and a chip system.

### BACKGROUND

Currently, when a user equipment (user equipment, UE) needs to perform a data service such as a voice call or a video call, a network side may indicate the UE to create a bearer used for data transmission and configure bearer configuration information such as a related rule for the created bearer. In addition, after the UE ends the data service, the network side may further indicate the UE to delete the created bearer and the bearer configuration information of the created bearer.

However, when deleting the bearer on the network side, the UE cannot be indicated to delete the bearer configuration information due to an exception. For example, when the UE needs to perform the data service, the network side sends, to the UE, a bearer creation message that carries first indication information to indicate the UE to create the bearer, and the first indication information is used to indicate that the to-be-created bearer has target bearer configuration information. However, when the UE needs to end the data service, due to an exception cause such as a network exception or an exception of a network element, there may be an exception that the network side sends, to the UE, a bearer deletion message that does not carry the first indication information to indicate the UE to delete the created bearer. For example, the bearer deletion message carries second indication information used to indicate that the to-be-deleted bearer does not have the target bearer configuration information, or carries neither the first indication information nor the second indication information. In this exception, after receiving the bearer deletion message, the UE does not delete local target bearer configuration information, and the UE also repeatedly sends, to the network side, a delete request for requesting to delete the target bearer configuration information. However, the UE repeatedly sending the deletion request may affect the data service of the UE.

### SUMMARY

This application provides an information processing method, a terminal device, and a chip system, so that impact on a terminal service when a network exception occurs can be reduced. The technical solutions are as follows.

According to a first aspect, an information processing method is provided and is applied to a UE. The method includes: The UE receives a first message that is sent by a network side and that carries a quality of service class identifier and first indication information, where the first message is used to indicate to create a first bearer corresponding to the quality of service class identifier, and the first indication information is used to indicate that a to-be-created bearer has target bearer configuration information; and in response to the first message, sends, to the network side, a first response message that is used to indicate to accept creation of the first bearer. Then, the UE receives a second message that is sent by the network side and that carries the quality of service class identifier but does not carry the first indication information, where the second message is used to indicate to delete the first bearer of the quality of service class identifier. For example, the second message carries second indication information or carries neither the first indication information nor the second indication information, and the second indication information is used to indicate that the to-be-deleted bearer does not have the target bearer configuration information. The UE deletes the target bearer configuration information of the first bearer in response to the second message.

Usually, the first message sent when the network side creates the bearer for a data service of the UE carries the first indication information, and the second message sent when the bearer is deleted also needs to carry the first indication information. However, when an exception such as a network exception or an exception of a network element occurs on the network side, the second message sent by the network side to the UE when the bearer is deleted may not carry the first indication information, for example, carry the second indication information, or carry neither the first indication information nor the second indication information. In this case, after receiving the second message, the UE may not delete the locally stored target bearer configuration information, and further repeatedly sends, to the network side, a first deletion request that is used to request to delete the target bearer configuration information. However, that the UE repeatedly sends the deletion request may affect the data service of the UE, for example, cause a bearer of a next data service to be exceptionally deleted, causing the next data service to exceptionally end.

In this embodiment of this application, to reduce impact on a terminal service when the network exception occurs, after the UE receives the first message that is sent by the network side and that carries the first indication information and is used to indicate to create the bearer, if the UE receives the second message that is used to indicate to delete the created bearer, even if the second message does not carry the first indication information, it is also considered that the second message carries the first indication information, and the target bearer configuration information of the created bearer is deleted. For example, the locally stored target bearer configuration information of the created bearer is deleted. For example, after the second message that is used to indicate to delete the created bearer is received, even if the second message carries the second indication information, it is also considered that the second message carries the first indication information, and the target bearer configuration information of the created bearer is deleted. Alternatively, even if the second message carries neither the first indication information nor the second indication information, it is also considered that the second message carries the first indication information and the target bearer configuration information of the created bearer is deleted.

In this way, when the network side cannot indicate, due to the exception, the UE to delete the target bearer configuration information, a case in which the UE repeatedly sends the first deletion request for requesting to delete the target bearer configuration information may be avoided, so that a bearer of the next data service is mistakenly deleted on the network side due to the deletion request repeatedly sent by the UE, thereby avoiding impact on the next data service caused by an exception that the network side cannot indicate, due to an exception, the UE to delete the bearer configuration information, reducing impact on a UE service when the network exception occurs, improving stability and reliability of the service, and further improving user experience.

The target bearer configuration information may be any configuration information related to the bearer. The target bearer configuration information includes one or more of the following information: a QoS rule, EPS bearer context mapping information, QoS flow description information, and the like. Certainly, the target bearer configuration information may also include other bearer configuration information. This is not limited in this embodiment of this application.

The QoS rule is used to indicate a QoS transmission mechanism rule of a QoS flow corresponding to the corresponding bearer. The QoS transmission mechanism rule may be intelligently managed, to provide high-quality network services for different types of data transmission. For example, the QoS rule may include one or more of a priority rule, a bandwidth guarantee rule, a delay control rule, or a packet loss control rule. The priority rule is used to intelligently manage data transmission based on importance of different types of data by setting the priority rule. For example, for video data with a high real-time requirement, a priority of the video data may be set to high, thereby preferentially transmitting the video data. The bandwidth guarantee rule is used to limit a bandwidth occupation ratio of each data type, to avoid a case in which network overload occurs, and ensure network bandwidth reasonable utilization. The delay control rule is used to perform delay management on data transmission, to ensure data transmission timeliness, to meet some delay-sensitive application requirements. The packet loss control rule is used to ensure integrity of data transmission by performing packet loss management on data transmission, to avoid a case in which a data packet loss occurs in network transmission.

The EPS bearer context mapping information is used to indicate a mapping relationship between an EPS bearer and a QoS flow. The QoS flow description information is used to define the QoS flow corresponding to the corresponding bearer.

In an embodiment of this application, for the first message indicating to create the bearer and the second message indicating to delete the bearer, the two messages may indicate, by carrying different indication information (the first indication information and the second indication information), whether the corresponding bearer is configured with the target bearer configuration information. For example, the first message and the second message each carry a bearer configuration identifier, and the bearer configuration identifier is used to indicate whether the corresponding bearer has the target bearer configuration information. The bearer configuration identifier may be preconfigured with different identifier values. For example, the identifier values of the bearer configuration identifier may include a first identifier value and a second identifier value, the first identifier value is used to indicate that the corresponding bearer has the target bearer configuration information, and the second identifier value is used to indicate that the corresponding bearer does not have the target bearer configuration information. For example, the first identifier value and the second identifier value are 1 and 0 respectively. Certainly, the first identifier value and the second identifier value may also be in another form. This is not limited in this embodiment of this application.

In this case, the first indication information is a bearer configuration identifier whose identifier value is the first identifier value, and the second indication information is a bearer configuration identifier whose identifier value is the second identifier value. For example, the first indication information is qos _rules_incl=1, indicating that the corresponding bearer is configured with a QoS rule; and the second indication information is qos _rules_incl=0, indicating that the corresponding bearer is not configured with a QoS rule.

In another embodiment of this application, the two messages may further indicate, by carrying the first indication information, whether the corresponding bearer is configured with the target bearer configuration information. For example, for the two messages, if the messages carry the first indication information, it indicates that the corresponding bearer is configured with the target bearer configuration information. If the messages do not carry the first indication information, it indicates that the corresponding bearer is not configured with the target bearer configuration information. The first indication message may be a configuration identifier of the target bearer configuration information, for example, a configuration ID or number of the target bearer configuration information. For example, the first indication message may be an id=28.

Quality of service class identifiers corresponding to different network standards are represented in different manners. For example, a quality of service class identifier in an LTE network may be represented by a QCI, and a quality of service class identifier in a 5G network may be represented by a 5QI. Different quality of service class identifier values are used to indicate different service types. The service types may include a voice call, a video call, surfing, and the like. For example, the QCI=1 and the 5QI=1 correspond to a voice call service, and the QCI=2 and the 5QI=2 correspond to a video call service.

In this embodiment of this application, quality of service class identifier values carried in a bearer creation message and a bearer deletion message may be any one of available quality of service class identifier values, that is, a service type corresponding to the quality of service class identifier may be any service type within a protocol-allowed service type range. For example, the QCI value and the 5QI may be any value in 1, 2, ..., 9. Certainly, the 5QI may alternatively be a value greater than 9. This is not limited in this embodiment of this application.

A bearer identifier is used to indicate the to-be-created or the to-be-deleted bearer. Forms of bearers created in different network standards are different, and corresponding bearer identifiers are represented in different manners. For example, a bearer created in the LTE network may be a QoS flow, and a corresponding bearer identifier may be a QoS flow ID (QoS flow ID, QFI). A bearer created in the 5G network may be an EPS bearer, and a corresponding bearer identifier may be an EPS bearer ID (EPS Bearer ID, EBI).

In addition, the first message and the second message may further carry an identifier of the target bearer configuration information, for example, an ID or a number of the target bearer configuration information. Certainly, the first message and the second message may further carry other information. This is not limited in this embodiment of this application.

In an embodiment of this application, in response to the second message, the UE may delete the locally stored target bearer configuration information, and send a second response message to the network side, where the second response message is used to indicate to accept deletion of the first bearer.

That is, after receiving the second message, the UE immediately deletes the locally stored target bearer configuration information, and sends the response message to the network side.

In another embodiment of this application, the UE may first send the second response message to the network side in response to the second message; and after sending a first deletion request for one or more times to the network side, if not receiving first deletion indication information for the first deletion request, delete the locally stored target bearer configuration information of the first bearer, where the first deletion indication information is used to indicate to delete the target bearer configuration information of the first bearer.

That is, after receiving the second message, the UE first sends the response message to the network side, and then sends the first deletion request for requesting to delete the target bearer configuration information for one or more times to the network side, to attempt to negotiate with the network side to delete the target bearer configuration information. In addition, after sending the first deletion request for one or more times to the network side, and not receiving the first deletion indication information for the first deletion request, the UE may also actively delete the locally stored bearer configuration information of the first bearer without consent of the network side, and no longer repeatedly send the first deletion request. In this way, a case in which the UE repeatedly sends the first deletion request after being rejected by the network side is avoided.

The first deletion indication information may be a third message, the third message includes the quality of service class identifier, the bearer identifier, and the first indication information, and the third message is used to indicate to delete the first bearer corresponding to the quality of service class identifier and the target bearer configuration information of the first bearer.

In another embodiment of this application, a quantity of times that the UE repeatedly sends the first deletion request may be controlled, to prevent the UE from repeatedly sending the first deletion request. For example, after sending the deletion request for a preset quantity of times to the network side, if not receiving the first deletion indication information for the first deletion request, the UE deletes the locally stored bearer configuration information of the first bearer.

That is, the UE is only allowed to send the first deletion request for a maximum of the preset quantity of times to the network side. If the UE does not receive the first deletion indication information for the first deletion request after a quantity of times of sending the first deletion request reaches the preset quantity of times, the UE may actively delete the locally stored target bearer configuration information without consent of the network side. In this way, a case in which the UE repeatedly sends the first deletion request after being rejected by the network side can be avoided.

In another embodiment of this application, timing duration may be set for an operation of repeatedly sending the first deletion request by the UE, to prevent the UE from repeatedly sending the first deletion request. For example, after receiving the second message, the UE starts a first timer; sends the first deletion request for one or more times to the network side within the timing duration of the first timer; and if not receiving the first deletion indication information for the first deletion request within the timing duration of the first timer, deletes the locally stored bearer configuration information of the first bearer.

That is, the UE is only allowed to send the first deletion request within the timing duration of the first timer. If the UE does not receive the first deletion indication information for the first deletion request within the timing duration of the first timer, the UE may actively delete the locally stored target bearer configuration information without consent of the network side. In this way, a case in which the UE repeatedly sends the first deletion request after being rejected by the network side can be avoided.

It may be understood that starting the first timer after receiving the second message may include any one of the following implementations: starting the first timer in response to receiving the second message, that is, immediately starting the first timer after receiving the second message; starting the first timer when sending the second response message to the network side; starting the first timer after sending the second response message to the network side; starting the first timer when sending the first deletion request to the network side for the first time; and starting the first timer after sending the first deletion request to the network side for the first time. Certainly, the first timer may be started on another appropriate occasion after the second message is received. This is not limited in this embodiment of this application.

In an embodiment of this application, the not receiving first deletion indication information for the first deletion request includes: receiving a deletion reject message sent by the network side, where the deletion reject message is used to indicate to reject to delete the target bearer configuration information of the first bearer; and not receiving the first deletion indication information, for the first deletion request, sent by the network side, that is, after receiving the deletion reject message sent by the network side, not receiving the first deletion indication information sent by the network side.

In an embodiment of this application, when in which the terminal device camps on a 5th generation 5G network, the quality of service class identifier is a quality of service class identifier 5QI in the 5G network, the first message and the second message are protocol data unit PDU session modification command messages, and the first response message is a PDU session modification complete message; and when in which the terminal device camps on a long term evolution LTE network, the quality of service class identifier is a quality of service class identifier QCI in the LTE network, the first message is an active dedicated evolved packet system EPS bearer context request message, the first response message is an active dedicated EPS bearer context accept message, and the second message is a deactive dedicated EPS bearer context request message.

In an embodiment of this application, when in which the terminal device camps on a 5G network, the second response message is a PDU session modification complete message, and the first deletion request is a PDU session modification request message; and when in which the terminal device camps on an LTE network, the second response message is a deactive dedicated EPS bearer context accept message, and the first deletion request is a modification EPS bearer context request message.

In an embodiment of this application, when in which the terminal device camps on the 5G network, the first message and the second message further include a PDU session identifier, the PDU session modification request message includes the PDU session identifier, and the PDU session identifier is used to identify a session corresponding to the first bearer.

In an embodiment of this application, when in which the terminal device camps on a 5G network, the deletion reject message is a PDU session modification reject message, and the third message is a PDU session modification command message; and when in which the terminal device camps on an LTE network, the deletion reject message is a bearer resource modification reject message, and the third message is a deactive dedicated EPS bearer context request message.

In an embodiment of this application, a service type indicated by the quality of service class identifier is a voice call service or a video call service. Before receiving the first message sent by the network side, the UE may further initiate a call or receive an incoming call through the network side.

For example, the UE may send a first invite Invite message to the network side, receive a first temporary response message sent by the network side, and then receive a first session ongoing message sent by the network side. Alternatively, the UE receives a second Invite message sent by the network side, sends a second temporary response message to the network side in response to the second Invite message, and then sends a second session ongoing message to the network side. The temporary response message may be a 100 Tying message, and the session ongoing message may be a 183 message.

According to a second aspect, an information processing apparatus is provided. The information processing apparatus has a function of implementing a behavior in the information processing method according to the first aspect. The information processing apparatus includes at least one module, and the at least one module is configured to implement the information processing method according to the first aspect.

According to a third aspect, an information processing apparatus is provided. A structure of the information processing apparatus includes a processor and a memory. The memory is configured to store a program that supports the information processing apparatus in performing the information processing method according to the first aspect, and store data used to implement the information processing method according to the first aspect. The processor is configured to execute the program stored in the memory. The information processing apparatus may further include a communication bus. The communication bus is configured to establish a connection between the processor and the memory.

According to a fourth aspect, a computer-readable storage medium is provided. The computer-readable storage medium stores instructions; and when the instructions are run on a computer, the computer is enabled to perform the information processing method according to the first aspect.

According to a fifth aspect, a computer program product including instructions is provided. When the computer program product is run on a computer, the computer is enabled to perform the information processing method according to the first aspect.

According to a sixth aspect, a chip system is provided. The chip system includes one or more interface circuits and one or more processors. The interface circuit is interconnected to the processor through a line. The chip system is applied to a terminal device that includes a communication module and a memory. The interface circuit is configured to receive a signal from the memory, and send the signal to the processor. The signal includes computer instructions stored in the memory; and when the processor executes the computer instructions, the terminal device performs the information processing method according to the first aspect.

Technical effects achieved in the second aspect, the third aspect, the fourth aspect, the fifth aspect, and the sixth aspect are similar to technical effects achieved by corresponding technical means in the first aspect. Details are not described herein again.

### BRIEF DESCRIPTION OF THE DRAWINGS

FIG. 1 is a schematic diagram of a communication system to which a technical solution according to an embodiment of this application is applicable;
FIG. 2 is a schematic diagram of another communication system to which a technical solution according to an embodiment of this application is applicable;
FIG. 3 is a schematic diagram of a structure of a terminal device according to an embodiment of this application;
FIG. 4A to FIG. 4C are a schematic diagram of a paging procedure according to a related technology;
FIG. 5A to FIG. 5C are a schematic diagram of a paging procedure according to an embodiment of this application;
FIG. 6A to FIG. 6C are is a schematic diagram of another paging procedure according to an embodiment of this application; and
FIG. 7 is a block diagram of a software structure of a terminal device according to an embodiment of this application.

### DESCRIPTION OF EMBODIMENTS

To make the objectives, technical solutions, and advantages of this application clearer, implementations of this application are further described in detail below with reference to the accompanying drawings.

It should be understood that "a plurality of" mentioned in this application means two or more. In the descriptions of this application, unless otherwise stated, "/" means "or". For example, A/B may indicate A or B. The term "and/or" in this specification is merely an association relationship for describing associated objects, and indicates that three relationships may exist. For example, "A and/or B" may indicate the following three cases: Only A exists, both A and B exist, and only B exists. In addition, for ease of describing the technical solutions in this application clearly, the words such as "first" and "second" are used to distinguish between same or similar items with basically same functions or purposes. A person skilled in the art may understand that the words such as "first" and "second" do not limit a quantity or an execution sequence, and the words such as "first" and "second" do not indicate a definite difference.

Terms used in implementations of this application are merely used for explaining specific embodiments of this application, but are not intended to limit this application. Application scenarios of the embodiments of this application are described in detail below with reference to the accompanying drawings.

An information processing method provided in the embodiments of this application may be applied to a communication system. The communication system may be a long term evolution (Long Term Evolution, LTE) communication system, a 5th generation (5th generation, 5G) communication system, or a new communication system emerging in future wireless communication development. This is not limited in the embodiments of this application. The communication system may include a terminal device, an access network device, a core network device, and an internet-protocol multimedia subsystem (Internet-protocol Multimedia Subsystem, IMS), and the access network device, the core network device, and the IMS may be collectively referred to as a network (NetWork, NW).

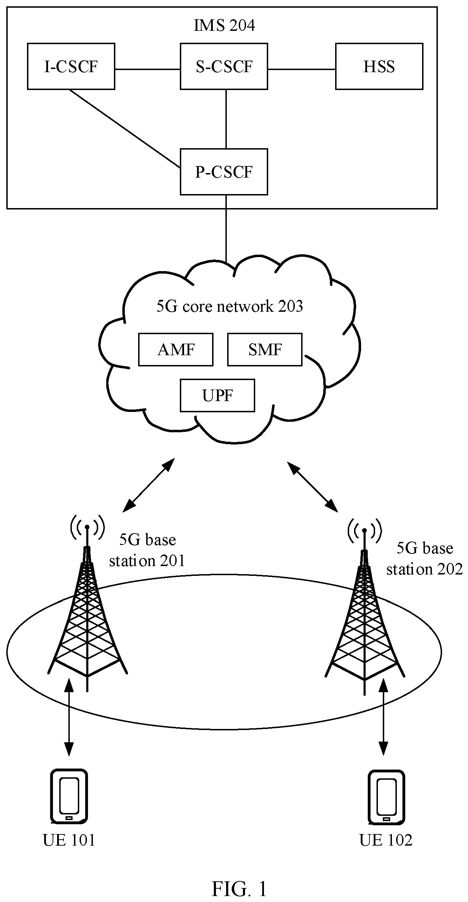

FIG. 1 is a schematic diagram of a communication system to which a technical solution according to an embodiment of this application is applicable. As shown in FIG. 1, the communication system may include a UE 101, a UE 102, and a 5G NW. A deployment manner of the 5G NW is standalone (standalone, SA). The 5G NW may include a 5G base station 201, a 5G base station 202, a 5G core network (5G core network, 5GC) 203, and an IMS 204. The 5G base station 201 and the 5G base station 202 are connected to the 5G core network 203, and the 5G core network 203 is connected to the IMS 204.

The UE 101 and the UE 102 are terminal devices. The terminal device may include a smartphone (for example, a mobile phone equipped with an Android system or an iOS system), a tablet computer, a notebook computer, a palmtop computer, a mobile internet device (mobile internet device, MID), a wearable device (for example, a smart watch or a smart band), or another device that can access the internet. In the embodiments of this application, the terminal device may be an independently sold terminal or a chip in the terminal. In the technical solutions provided in the embodiments of this application, the technical solutions provided in the embodiments of this application are described by using an example in which an apparatus for implementing a function of a terminal is a terminal device.

As an example, the terminal device stores user information. The user information may include an international mobile subscriber identification number (international mobile subscriber identification number, IMSI). The IMSI may be stored in a subscriber identity module (subscriber identity module, SIM) card of the terminal device. The terminal device may use the user information as an identity to initiate a call or receive a call through various voice solutions.

The 5G base station 201 and the 5G base station 202 may be next generation NodeBs (next generation NodeB, gNB). The 5G base station 201 may be connected to the UE 101, and communicate with the UE 101 by using a 5G new radio (new radio, NR) access technology, that is, the 5G base station 201 communicates with the UE 101 through an NR link. The 5G base station 202 may be connected to the UE 102, and communicate with the UE 102 by using a 5G NR access technology, that is, the 5G base station 202 communicates with the UE 102 through an NR link.

The 5G core network 203 is configured for exchanging, forwarding, connection, and routing of data. A network element in the 5G core network 203 is a functional virtual unit, and may include but is not limited to an access and mobility management function (access and mobility management function, AMF), a user plane function (user plane function, UPF), and a session management function (session management function, SMF). The AMF may perform registration, connection, reachability, and mobility management, provide a session management message transmission channel for the UE and the SMF, and provide authentication and authorization functions for the UE during access. The SMF is responsible for tunnel maintenance, internet protocol (internet protocol, IP) address assignment and management, policy implementation and quality of service (quality of service, QoS) control, charging data collection, roaming, and the like. For example, the SMF may be configured to manage a UE session through the UPF, and establish, modify, and release each session. The UPF is mainly responsible for routing and forwarding related functions of a user plane packet.

The IMS 204 may include a call session control function (call session control function, CSCF) and a home subscriber server (home subscriber server, HSS). The CSCF is configured to control signaling in a multimedia call session, perform authentication, cooperate with another network entity to control a session, and the like. The HSS is configured to manage user data, for example, store all user and service related data such as a user identity, subscription information, and access information.

The CSCF may include a proxy call session control function (Proxy Call Session Control Function, P-CSCF) entity, an interrogating call session control function (Interrogating Call Session Control Function, I-CSCF), and a serving call session control function (Serving Call Session Control Function, S-CSCF) entity. The P-CSCF entity is a first connection point from an access network to the IMS. All session messages initiated by the UE supporting the IMS and terminated by the UE supporting the IMS are forwarded by the P-CSCF entity. The I-CSCF entity may be connected to the S-CSCF entity and the P-CSCF entity, and is configured to provide an access point of a home network for the UE. In a call process, a call message to an IMS network is first routed to the I-CSCF. The I-CSCF entity may query, for the UE through the HSS in the IMS, address information of the S-CSCF entity registered by the user, and then route the message to the S-CSCF. The S-CSCF entity is a control core of the IMS, and provides functions such as session control and registration for the UE.

As an example, the UE 101 serves as a calling UE, and the UE 102 serves as a called UE. The UE 101 and the UE 102 may implement a voice call service or a video call service through the 5G NW.

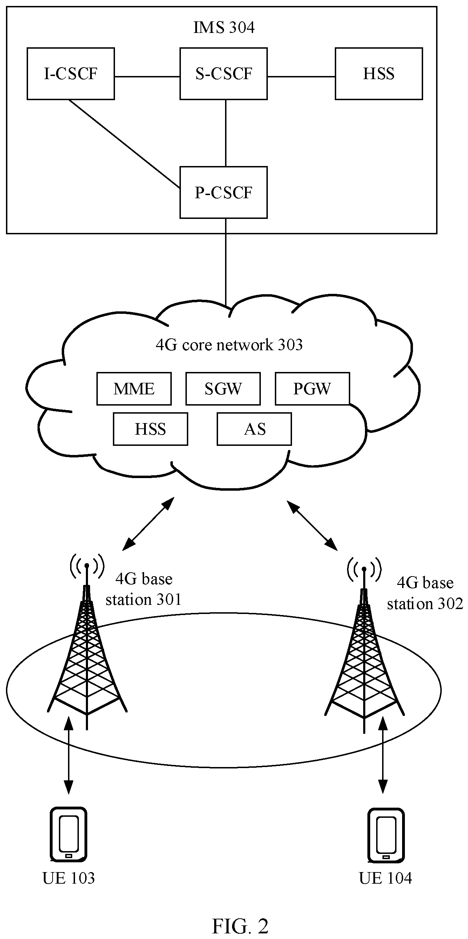

FIG. 2 is a schematic diagram of another communication system to which a technical solution according to an embodiment of this application is applicable. As shown in FIG. 2, the communication system may include a UE 103, a UE 104, and a 4G NW. The 4G NW may include a 4G base station 301, a 4G base station 302, a 4G core network (evolved packet core, EPC) 303, and an IMS 304. The 4G base station 301 and the 4G base station 302 are connected to the 4G core network 303, and the 4G core network 303 is connected to the IMS 304.

The UE 103 and the UE 104 are terminal devices. Details are not described herein again.

The 4G base station 301 may be an evolved NodeB (evolved NodeB, eNB). The 4G base station 301 may be connected to the UE 103, and communicate with the UE 103. The 4G base station 302 may be connected to the UE 104, and communicate with the UE 104.

The 4G core network 303 mainly includes the following network elements: a mobility management entity (mobility management entity, MME), a serving gateway (serving gateway, SGW), a packet data network gateway (packet data network gateway, PGW), a home subscriber server (home subscriber server, HSS), an application server (application server, AS), and the like. Main functions of the MME include access control, mobility management, attachment and de-attachment, session management (for example, bearer establishment, modification, and release), and the like. The SGW is mainly configured to route and forward a data packet. Main functions of the PGW include a user-based packet filtering function, a lawful interception function, an IP address assignment function, and the like. The HSS is configured to store user subscription information, user subscription data, mobile user location information, and the like.

A function of the IMS 304 is similar to that of the IMS 204. Details are not described herein again in this embodiment of this application.

As an example, the UE 103 serves as a calling UE, and the UE 104 serves as a called UE. The UE 103 and the UE 104 may implement a voice call service or a video call service through the 4G NW.

As another example, the UE in the 4G communication system may also implement a voice call service or a video call service with the UE in the 5G communication system. For example, the UE 101 implements a voice call service or a video call service with the UE 103 through the 4G NW and the 5G NW in which the UE 103 is located.

It may be understood that, the units shown in FIG. 1 and FIG. 2 do not constitute a specific limitation on the wireless communication system. The wireless communication system may further include more or fewer units than those shown in the figure, or some units may be combined, or some units may be split, or the units may be arranged in different manners. This is not limited in this application.

The following describes the terminal device in the embodiments of this application.

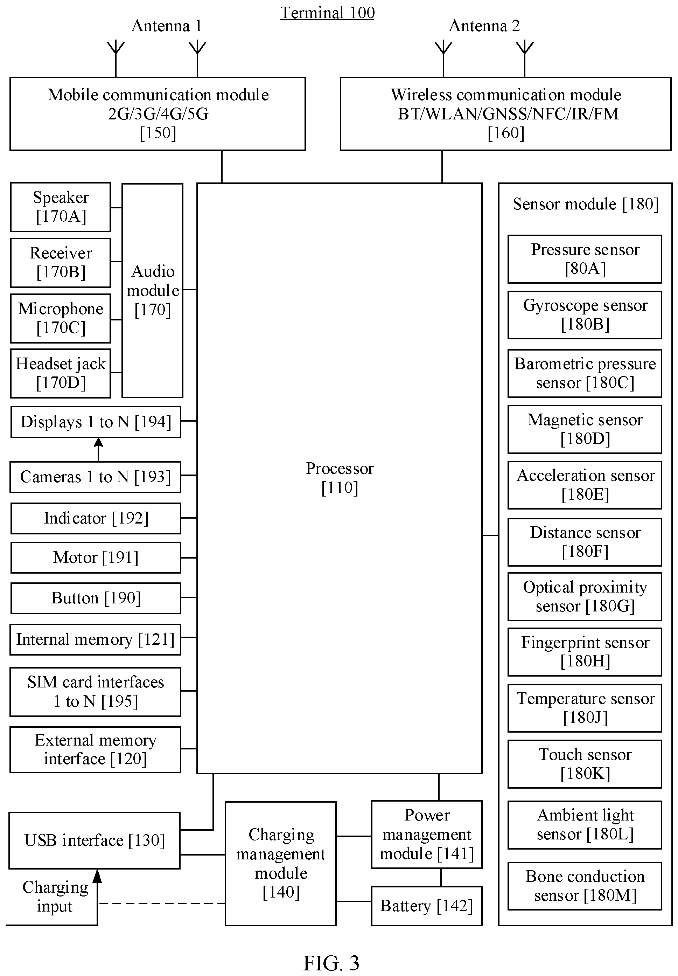

FIG. 3 is a schematic diagram of a structure of a terminal device 100 according to an embodiment of this application. The terminal 100 may be the UE 101 and the UE 102 in FIG. 1, or the UE 103 and the UE 104 in FIG. 2. Refer to FIG. 3. The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the terminal device 100. In some other embodiments of this application, the terminal device 100 may include more or fewer components than those shown in the figure, some components may be combined, some components may be split, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the terminal device 100. The controller may generate an operation control signal according to instruction operation code and a time-sequence signal, and control obtaining and executing of instructions.

A memory may be further disposed in the processor 110, and is configured to store instructions and data. In some embodiments, the memory in the processor 110 is a cache memory. The memory may store instructions or data that have/has been recently used or cyclically used by the processor 110. If the processor 110 needs to use the instructions or the data again, the processor 110 may directly invoke the instructions or the data from the memory. This avoids repeated access, and reduces waiting time of the processor 110, so that system efficiency is improved.

In some embodiments, the processor 110 may include one or more interfaces, for example, may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and a universal serial bus (universal serial bus, USB) interface.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input by using a wireless charging coil of the terminal device 100. While charging the battery 142, the charging management module 140 may further supply power to the terminal device 100 through the power supply management module 141.

The power management module 141 is configured to be connected to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor a parameter such as a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal device 100 may be implemented with the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used together with a tuning switch.

The mobile communication module 150 can provide a wireless communication solution that is applied to the terminal device 100 and that includes 2G/3G/4G/5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits, to the baseband processor for processing, the low-frequency baseband signal obtained through demodulation. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the terminal device 100, and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-transmitted signal from the processor 110, conduct frequency modulation and amplification on the to-be-transmitted signal, and convert an amplified signal into an electromagnetic wave for radiation through the antenna 2.

In some embodiments, in the terminal device 100, the antenna 1 and the mobile communication module 150 are coupled, and the antenna 2 and the wireless communication module 160 are coupled, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The terminal device 100 implements a display function through a GPU, the display 194, the application processor, and the like. The GPU is a microprocessor for image processing and is connected to the display 194 and the application processor. The GPU is configured to perform mathematical and geometric computation, and render an image. The processor 110 may include one or more GPUs that execute program instructions to generate or change display information. The terminal device 100 may implement a photographing function through the ISP, the camera 193, the video codec, the GPU, the display 194, the application processor, and the like.

The external memory interface 120 may be configured to be connected to an external memory card such as a Micro SD card, to expand a storage capability of the terminal device 100. The external memory card communicates with the processor 110 through the external memory interface 120 to implement a data storage function, for example, to store files such as music and a video in the external memory card.

The internal memory 121 may be configured to store computer-executable program code, and the computer-executable program code includes instructions. The processor 110 runs the instructions stored in the internal memory 121, to perform various function applications and data processing of the terminal device 100. The internal memory 121 may include a program storage area and a data storage area. The program storage area may store an operating system, an application required by at least one function (for example, a sound playing function or an image playing function), and the like. The data storage area may store data (for example, audio data and a phone book) in a process of using the terminal device 100, and the like. In addition, the internal memory 121 may include a high-speed random access memory, and may also include a nonvolatile memory, for example, at least one magnetic disk storage device, a flash memory, or a universal flash storage (universal flash storage, UFS).

The terminal device 100 may implement an audio function, for example, music playing or audio recording, through the audio module 170, the speaker 170A, the receiver 170B, the microphone 170C, the headset jack 170D, the application processor, and the like.

The SIM card interface 195 is configured to be connected to a SIM card. The SIM card may be inserted into the SIM card interface 195 or removed from the SIM card interface 195, to implement contact with and separation from the terminal device 100. The terminal device 100 may support one or N SIM card interfaces. N is an integer greater than 1. The SIM card interface 195 can support a nano SIM card, a micro SIM card, a SIM card, and the like. A plurality of cards may be inserted into a same SIM card interface 195 at the same time. The plurality of cards may be of a same type or different types. The SIM card interface 195 is further compatible with SIM cards of different types. The SIM card interface 195 is also compatible with an external storage card. The terminal device 100 interacts with a network by using the SIM card, to implement a call function, a data communication function, and the like. In some embodiments, the terminal device 100 uses an eSIM, namely, an embedded SIM card. The eSIM card may be embedded in the terminal device 100, and cannot be separated from the terminal device 100.

It may be understood that the structure illustrated in this embodiment does not constitute a specific limitation on the terminal device 100. In some other embodiments, the terminal device 100 may include more or fewer components than those shown in the figure, some components may be combined, some components may be split, or different component arrangements may be used. The components in the figure may be implemented by hardware, software, or a combination of software and hardware.

Methods in the following embodiments may all be implemented in the terminal device 100 having the foregoing hardware structure. The following uses an example in which the terminal device 100 is a UE for description.

Currently, when the UE needs to perform a data service such as a voice call, a video call, or surfing the internet, a network side may indicate the UE to create a bearer used for data transmission and configure bearer configuration information such as a related rule for the created bearer. In addition, after the UE ends the data service, the network side may further indicate the UE to delete the created bearer and the bearer configuration information of the bearer. However, when deleting the bearer on the network side, the UE cannot be indicated to delete the bearer configuration information due to an exception, thereby affecting the data service of the UE. For example, a next data service of the UE is affected, causing the next data service of the UE to exceptionally end.

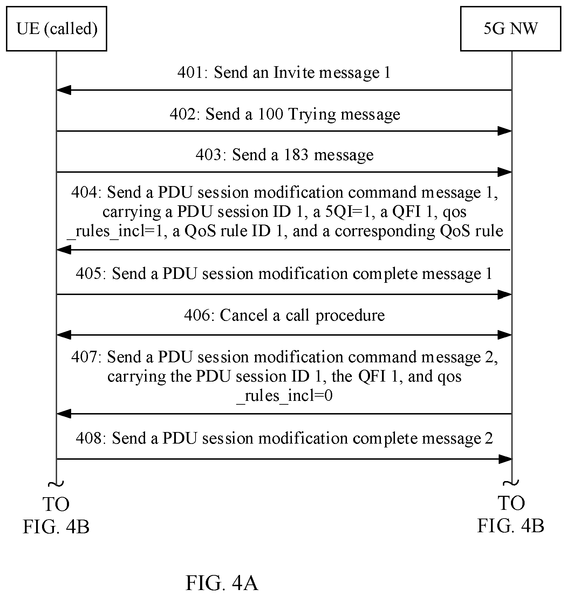

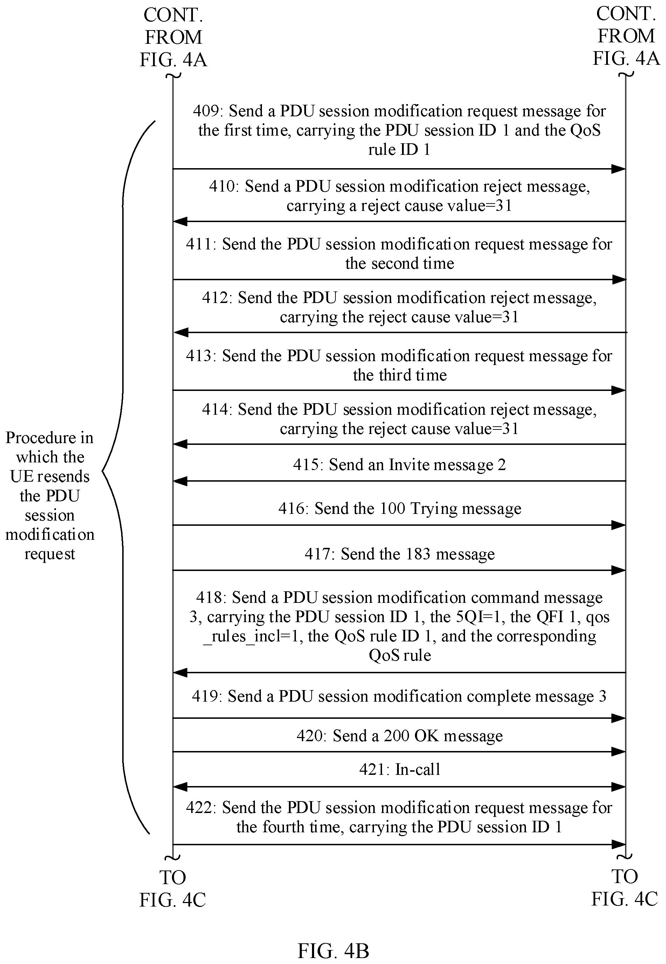

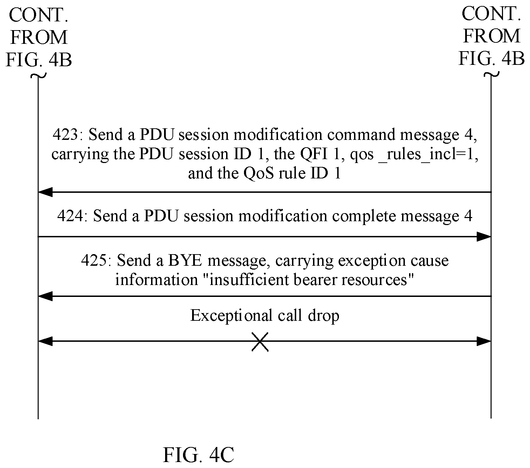

Next, that the data service is a voice call service, and the UE camps on a 5G network and is called UE is used as an example. With reference to the accompanying drawings, a case in which the network side cannot indicate the UE to delete the bearer configuration information, causing an exception in a paging procedure in a related technology is described in detail. FIG. 4A to FIG. 4C are a schematic diagram of a paging procedure according to a related technology. As shown in FIG. 4A to FIG. 4C, the paging procedure includes the following steps.

Step 401: A network side sends an invite (Invite) message 1 to a UE.

The network side is a 5G network in which the UE is located. The Invite message is a common session initiation protocol (session initiation protocol, SIP) request message, and is used to establish a session for media exchange between user agents. A SIP is an application layer protocol that can be used to establish, modify, and release a multimedia session in an IP network. SIP applications mainly include but are not limited to a voice, messaging, a video, call control, and the like.

In response to a user operation, a calling UE may initiate a call. The calling UE may send a call request message (for example, the Invite message 1) through a calling side network (a network with which the calling UE is registered). After the Invite message 1 arrives at a called side network (the network side), the called side network sends the invite message 1 to the called UE.

Step 402: The UE sends a 100 Trying message to the network side.

The 100 Trying message is a temporary response message, and is used to indicate that the network side UE has received the Invite message 1, and the message is being processed.

After receiving the Invite message 1, the called UE may send the 100 Trying message through the network side (the called side network). After the 100 Trying message arrives at the calling side network, the host side network sends the 100 Trying message to the calling UE.

Step 403: The UE sends a 183 message to the network side.

The 183 message is used to indicate that the call is being connected.

Step 404: The network side sends a PDU session modification command (PDU session modification command) message 1 to the UE, where the PDU session modification command message 1 carries PDU session identity (Identity document, ID) 1, a 5QI=1, a QFI 1, qos _rules_incl=1, a QoS rule ID 1, and a corresponding QoS rule.

After receiving the 183 message fed back by the called UE, the network side may send the PDU session modification command message to the UE to create a bearer 1 used to carry voice call data for the UE.

The PDU session ID 1 is used to identify a session corresponding to the bearer 1. The 5QI (5G QoS class identifier) is a 5G quality level class identifier, and different 5QI values respectively correspond to different resource types, priorities, delays, and packet loss rates. In addition, different 5QI values correspond to different service types. For example, 5QI=1 corresponds to a voice call service. qos _rules_incl is a QoS rule configuration identifier in a bearer configuration identifier, and is used to indicate whether a corresponding bearer (namely, the bearer 1) is configured with a QoS rule. The QFI 1 is a bearer identifier of the bearer 1, and is used to indicate the bearer 1. A QoS flow identifier (QoS flow ID, QFI) is used to identify a QoS flow. In the 5G network, the QoS flow may be configured for the UE as a bearer. Therefore, the QoS flow indicated by the QFI 1 may be referred to as the bearer 1. qos _rules_incl=1 indicates that the corresponding bearer (namely, the bearer 1) is configured with the QoS rule. The QoS rule ID 1 may include one or more QoS rule IDs, and each QoS rule ID is used to indicate one QoS rule. The QoS rule corresponding to the QoS rule ID 1 is the QoS rule configured for the bearer 1. In addition, the PDU session modification command message 1 may further carry an operation code 1, and the operation code 1 is used to indicate to create the bearer.

The PDU session modification command message 1 is used to indicate to create the bearer 1 of the 5QI=1, namely, the bearer 1 used to carry voice call data; and the created bearer 1 of the 5QI=1 is configured with the QoS rule.

Step 405: The UE sends a PDU session modification complete (PDU session modification complete) message 1 to the network side.

After receiving the PDU session modification command message 1 of the network side, the UE may locally correspondingly-store the PDU session ID 1, the 5QI=1, the QFI 1, the QoS rule ID 1, and the QoS rule corresponding to the QoS rule ID 1, and return the session modification complete message 1 to the network side.

It should be noted that the QoS rule ID 1 and the corresponding QoS rule have a correspondence with the QFI 1. The correspondence is used to indicate that the QoS rule ID 1 and the corresponding QoS rule are configured for the QFI 1, that is, the QoS rule ID 1 is an ID of the QoS rule configured for the bearer 1 indicated by the QFI 1, and the QoS rule corresponding to the QoS rule ID 1 is a QoS rule configured for the bearer 1 indicated by the QFI 1.

Step 406: Cancel a call procedure between the network side and the UE.

Before a call is successfully established, the network side may cancel the call procedure due to an exception.

For example, the network side may send a CANCEL message to the UE to cancel the call procedure, and the CANCEL message is used to close a session that has not received a final response.

Step 407: The network side sends a PDU session modification command message 2 to the UE, where the PDU session modification command message 2 carries the PDU session ID 1, the QFI 1, and qos _rules_incl=0.

After the call is canceled, the network side may delete the created bearer 1 of the 5QI=1 by sending the PDU session modification command message 2 to the UE. qos _rules_incl=0 indicates that the corresponding bearer (namely, the bearer 1) is not configured with the QoS rule. In addition, the PDU session modification command message 2 may further carry an operation code 2, and the operation code 2 is used to indicate to delete the corresponding bearer (namely, the bearer 1).

Usually, if the PDU session modification command message sent when the bearer is created carries qos _rules_incl=1, the PDU session modification command message sent when the bearer is deleted also needs to carry qos _rules_incl=1. In this way, after receiving the PDU session modification command message used to indicate to delete the bearer, the UE can recognize that the to-be-deleted bearer is configured with the QoS rule, and delete the QoS rule corresponding to the locally stored bearer. However, because an exception such as a network exception or an exception of a network element occurs on the network side, in this exception, the PDU session modification command message 2 sent by the network side to the UE may carry qos _rules_incl=0 instead of qos _rules_incl=1.

Step 408: The UE sends a PDU session modification complete message 2 to the network side.

After the UE receives the PDU session modification command message 2, because the PDU session modification command message 2 carries qos _rules_incl=0, the UE considers that the to-be-deleted bearer 1 is not configured with the QoS rule, and therefore does not delete the QoS rule corresponding to the locally stored bearer 1 after the bearer 1 is deleted. That is, in response to the PDU session modification command message 2, the UE returns the PDU session modification complete message 2 to the network side without deleting the QoS rule corresponding to the locally stored bearer 1.

Step 409: The UE sends a PDU session modification request (PDU session modification request) message to the network side for the first time, where the PDU session modification request message carries the PDU session ID 1 and the QoS rule ID 1, and is used to request to delete the QoS rule corresponding to the QoS rule ID 1.

Because the UE also locally stores the QoS rule of the bearer 1, the UE requests to delete the QoS rule by sending, to the network side, the PDU session modification request message that carries the QoS rule ID 1 used to indicate the QoS rule of the bearer 1.

Step 410: The network side sends a PDU session modification reject (PDU session modification reject) message to the UE, where the PDU session modification reject message carries a reject cause value=31.

The PDU session modification reject message is used to indicate to reject a PDU session modification request of the UE, that is, reject to delete the QoS rule of the bearer 1. The reject cause value 31 "cause=31" is used to indicate an ambiguous cause. Because an exception occurs on the network side, it may be considered that the PDU session modification command message 2 is used to indicate the UE to delete the QoS rule of the bearer 1. After the PDU session modification request message used to request to delete the QoS rule is received, the PDU session modification request message is rejected.

Step 411: The UE sends the PDU session modification request message to the network side for the second time.

After the PDU session modification request message sent for the first time is rejected, the UE resends the PDU session modification request message to the network side, to request to delete the QoS rule again.

Step 412: The network side sends the PDU session modification reject message to the UE, where the PDU session modification reject message carries the reject cause value 31.

After receiving the PDU session modification request message sent by the UE for the second time, the network side rejects the received PDU session modification request message again similar to rejecting the PDU session modification request message sent by the UE for the first time, and returns the PDU session modification reject message to the UE.

Step 413: The UE sends the PDU session modification request message to the network side for the third time.

Step 414: The network side sends the PDU session modification reject message to the UE, where the PDU session modification reject message carries the reject cause value 31.

Similarly, after receiving the PDU session modification request message sent by the UE for the third time, the network side rejects the received PDU session modification request message again, and returns the PDU session modification reject message to the UE.

Step 415: The network side sends an Invite message 2 to the UE.

In a process in which the UE resends the PDU session modification request message to the network side, the called UE may receive the incoming call again, that is, the called UE is called again. In this case, the network side may receive the Invite message 2 sent by the calling UE through the calling side network and the called side network.

Step 416: The UE sends the 100 Trying message to the network side.

Step 417: The UE sends the 183 message to the network side.

Step 418: The network side sends a PDU session modification command message 3 to the UE, where the PDU session modification command message 3 carries the PDU session ID 1, the 5QI=1, the QFI 1, qos _rules_incl=1, the QoS rule ID 1, and the corresponding QoS rule.

The network side may send the PDU session modification command message 3 to the UE, and create the bearer that carries the voice call data for the UE again. The PDU session modification command message 1 is used to indicate to create a bearer 2 of the 5QI=1 to carry voice call data, and a bearer identifier of the bearer 2 is the QFI 1. In addition, the created bearer 2 of the 5QI=1 is configured with the QoS rule.

It should be noted that after the bearer 1 is deleted, the network side may reclaim the PDU session ID 1, the QFI 1, and the QoS rule ID 1. Therefore, when the bearer 2 is created, the reclaimed PDU session ID 1 may be reassigned to a PDU session corresponding to the bearer 2, the reclaimed QFI 1 is reassigned to a QoS flow corresponding to the bearer 2, and the QoS rule ID 1 is reassigned to the QoS rule configured for the bearer 2. In this way, the PDU session modification command message 3 and the PDU session modification command message 1 carry a same PDU session ID, a same QFI, and a same QoS rule ID.

Step 419: The UE sends a PDU session modification complete message 3 to the network side.

Step 420: The UE sends a 200 OK message to the network side.

The 200 OK message is a final response (final reponse) for the Invite message 2, and is used to indicate that a content part of a session description protocol (session description protocol, SDP) is switched over. Then, the UE may make a call with the calling UE through the network side.

Step 421: The UE makes the call with the calling UE through the network side.

Step 422: The UE sends the PDU session modification request message to the network side for the fourth time.

Because the PDU session modification request message that is sent by the UE and that is used to request to delete the QoS rule corresponding to the bearer 1 is repeatedly rejected by the network side, in a process in which the UE makes a call with the calling UE through the network side, the UE further continues to resend the PDU session modification request message to the network side.

Step 423: The network side sends a PDU session modification command message 4 to the UE, where the PDU session modification command message 4 carries the PDU session ID 1, the QFI 1, qos _rules_incl=1, and the QoS rule ID 1.

The network side sends the PDU session modification command message 4 to the UE in response to receiving the PDU session modification request message.

The PDU session modification command message 4 is used to indicate to delete the bearer 2 corresponding to the QFI 1 and the QoS rule (namely, the QoS rule ID 1) of the bearer 2.

After the PDU session modification request message sent by the UE for the fourth time is received, because the PDU session ID 1 and the QoS rule ID 1 carried in the PDU session modification request message are the same as the PDU session ID 1 and the QoS rule ID 1 corresponding to the bearer 2, the network side may mistakenly consider that the UE requests to delete the QoS rule of the bearer 2, and delete, based on the PDU session modification request message, the bearer 2 and the QoS rule, of the bearer 2, stored on the network side; and then indicates the UE to also delete the QoS rule, of the bearer 2, stored on the UE side by sending the PDU session modification command message 4 to the UE.

Step 424: The UE sends a PDU session modification complete message 4 to the network side.

Because the PDU session modification command message 4 carries qos _rules_incl=1, in response to the PDU session modification command message 4, the UE may delete the QoS (namely, the QoS rule corresponding to the bearer 2) corresponding to the locally stored PDU session ID 1, and return the PDU session modification complete message 4 to the network side.

Step 425: The network side sends a BYE message to the UE, where the BYE message carries exception cause information, and the exception cause information includes insufficient bearer resources.

The BYE message is used to end the call. Usually, the call starts with Invite and ends with BYE.

After bearer 2 is deleted, the current call loses the bearer used to transmit the voice call data. As a result, the current call ends due to insufficient bearer resources, resulting in an exceptional drop of the current call.

Currently, after the network side sends, to the UE, the PDU session modification command message 1 that carries qos _rules_incl=1, to indicate the UE to create the bearer 1 corresponding to a first voice call service, the network side may delete the created bearer 1 by sending, to the UE, the PDU session modification command message 2 that carries qos _rules_incl=0 due to an exception cause such as a network exception or an exception of a network element. In this way, the UE cannot delete the locally stored QoS rule based on the PDU session modification command message 2, and repeatedly sends the PDU session modification request message to the network side, to request to delete the local qos rule. In a process in which the UE resends the PDU session modification request message, if the UE needs to perform the voice call again, the network side creates, by sending the PDU session modification command message 3 to the UE, the corresponding bearer 2 for second voice call service. After the corresponding bearer 2 is created for the second voice call service, if the network side receives the PDU session modification request message that is resent by the UE and that is used to request to delete the QoS of the bearer 1, because both the PDU session ID and the QoS rule ID that correspond to the bearer 1 and the PDU session ID and the QoS rule ID that correspond to the bearer 2 are the same, the network side may mistakenly consider that the UE requests to delete the QoS rule of the bearer 2 corresponding to the second voice call service, and mistakenly delete the bearer 2 corresponding to the second voice call service. As a result, the voice call service for the second time ends due to the insufficient bearer resources.

That is, when deleting a bearer of a previous voice call service, the network side may be incapable of indicating the UE to delete the bearer configuration information due to an exception. As a result, the UE repeatedly sends a deletion request for requesting to delete the bearer configuration information. The resent deletion request of the UE may affect a next voice call of the UE. For example, in a next voice call process, the bearer of the voice call service is exceptionally deleted, and further, the voice call is exceptionally disconnected.

It may be learned from FIG. 4A to FIG. 4C that after the network side sends, to the UE, a bearer creation message that carries first indication information to indicate the UE to create the bearer corresponding to the first data service, when the bearer needs to be deleted, the network side may indicate the UE to delete the created bearer by sending, to the UE, an exception bearer deletion message that carries second indication information due to an exception cause such as a network exception or an exception of a network element (for example, an exception of a network element in a core network on the network side). The first indication information is used to indicate that the corresponding bearer has target bearer configuration information, and the second indication information is used to indicate that the corresponding bearer does not have the target bearer configuration information. After receiving the bearer creation message that carries the first indication information, the UE may locally store the target bearer configuration information. Then, if the exception bearer deletion message that carries the second indication information is received, because the second indication information is used to indicate that the corresponding bearer does not have the target bearer configuration information, the UE considers that the to-be-deleted bearer also does not have the target bearer configuration information, and does not delete the locally stored target bearer configuration information after the bearer is deleted. Because the UE also locally stores the target bearer configuration information, the UE sends, to the network side, the deletion request for requesting to delete the target bearer configuration information. However, due to an exception on the network side, it may be considered that the UE has been indicated to delete the target bearer configuration information by using the exception bearer deletion message. As a result, the deletion request of the UE is rejected. After the UE is rejected, the UE repeatedly sends the deletion request to the network side. In this process, if the UE needs to perform a second data service, the network side re-creates, for the UE, the bearer corresponding to the second data service by sending the bearer creation message to the UE. Then, if the network side receives the deletion request resent by the UE, in response to the deletion request, the bearer corresponding to the second data service may be mistakenly deleted. As a result, the second data service ends due to the insufficient bearer resources.

In this embodiment of this application, to reduce impact on a UE service when the network exception occurs, an information processing method is provided. In the method, after the UE receives a first message that is sent by the network side and that carries the first indication information and is used to indicate to create the bearer, if the UE receives a second message that is used to indicate to delete the created bearer, even if the second message does not carry the first indication information, it is also considered that the second message carries the first indication information, and the target bearer configuration information of the created bearer is deleted. For example, the locally stored target bearer configuration information of the created bearer is deleted.

For example, after the second message that is used to indicate to delete the created bearer is received, even if the second message carries the second indication information, it is also considered that the second message carries the first indication information, and the target bearer configuration information of the created bearer is deleted. Alternatively, even if the second message carries neither the first indication information nor the second indication information, it is also considered that the second message carries the first indication information and the target bearer configuration information of the created bearer is deleted.

In this way, when the network side cannot indicate, due to the exception, the UE to delete the bearer configuration information, a case in which the UE repeatedly sends the deletion request for requesting to delete the target bearer configuration information may be avoided, so that a bearer of a next data service is mistakenly deleted on the network side due to the deletion request repeatedly sent by the UE, thereby avoiding impact on the next data service caused by an exception that the network side cannot indicate, due to an exception, the UE to delete the bearer configuration information, reducing impact on the UE service when the network exception occurs, improving stability and reliability of the service, and further improving user experience.

It may be understood that the second message carrying the second indication information may include: the second message carrying the second indication information but not carrying the first indication message.

It should be noted that when the network side is a 5G network, the network side may create the bearer for the UE in a manner of establishing a PDU session with the UE. The PDU session may include a QoS flow, and the QoS flow is a finest granularity of QoS distinction in the PDU session, that is, the created bearer is the QoS flow. The QoS flow is an IP flow that satisfies specific QoS. When the network side is a 4G network (for example, an LTE network), the network side may create the bearer for the UE in a manner of establishing a public data network (public data network, PDN) connection with the UE. The PDN connection may include an evolved packet system (evolved packet system, EPS) bearer, that is, the created bearer is the EPS bearer. The EPS bearer of the PDN connection has a mapping relationship with the QoS flow of the PDU session. When a network standard is switched, the PS bearer of the PDN connection and the QoS flow of the PDU session may be mapped to each other. For example, if the UE switches from the 5G network to the 4G network, the QoS flow of the PDU session may be mapped to the EPS bearer of the PDN connection, and data transmission is performed based on the mapped EPS bearer. If the UE switches from the 4G network to the 5G network, the EPS bearer of the PDN connection can be mapped to the QoS flow of the PDU session, and data transmission is performed based on the mapped QoS flow.

In this embodiment of this application, the target bearer configuration information may be any configuration information related to the bearer. For example, the target bearer configuration information includes one or more of the following information: QoS rules (QoS rules), EPS bearer context mapping information (mapped EPS bearer contexts), QoS flow description information (QoS flow descriptions), and the like. Certainly, the target bearer configuration information may also include other bearer configuration information. This is not limited in this embodiment of this application.

The QoS rule is used to indicate a QoS transmission mechanism rule of the QoS flow corresponding to the corresponding bearer. The QoS transmission mechanism rule may be intelligently managed, to provide high-quality network services for different types of data transmission. For example, the QoS rule may include one or more of a priority rule, a bandwidth guarantee rule, a delay control rule, or a packet loss control rule. The priority rule is used to intelligently manage data transmission based on importance of different types of data by setting the priority rule. For example, for video data with a high real-time requirement, a priority of the video data may be set to high, thereby preferentially transmitting the video data. The bandwidth guarantee rule is used to limit a bandwidth occupation ratio of each data type, to avoid a case in which network overload occurs, and ensure network bandwidth reasonable utilization. The delay control rule is used to perform delay management on data transmission, to ensure data transmission timeliness, to meet some delay-sensitive application requirements. The packet loss control rule is used to ensure integrity of data transmission by performing packet loss management on data transmission, to avoid a case in which a data packet loss occurs in network transmission.

The EPS bearer context mapping information is used to indicate a mapping relationship between an EPS bearer and a QoS flow. The QoS flow description information is used to define the QoS flow corresponding to the corresponding bearer.

In an example, for the first message indicating to create the bearer and the second message indicating to delete the bearer, the two messages may indicate, by carrying different indication information (the first indication information and the second indication information), whether the corresponding bearer is configured with the target bearer configuration information. For example, the first message and the second message each carry a bearer configuration identifier, and the bearer configuration identifier is used to indicate whether the corresponding bearer has the target bearer configuration information. The bearer configuration identifier may be preconfigured with different identifier values. For example, the identifier values of the bearer configuration identifier may include a first identifier value and a second identifier value, the first identifier value is used to indicate that the corresponding bearer has the target bearer configuration information, and the second identifier value is used to indicate that the corresponding bearer does not have the target bearer configuration information. For example, the first identifier value and the second identifier value are 1 and 0 respectively. Certainly, the first identifier value and the second identifier value may also be in another form. This is not limited in this embodiment of this application.

In this case, the first indication information is a bearer configuration identifier whose identifier value is the first identifier value, and the second indication information is a bearer configuration identifier whose identifier value is the second identifier value. For example, the first indication information is qos _rules_incl=1, indicating that the corresponding bearer is configured with a QoS rule; and the second indication information is qos _rules_incl=0, indicating that the corresponding bearer is not configured with a QoS rule.

In another example, the two messages may further indicate, by carrying the first indication information, whether the corresponding bearer is configured with the target bearer configuration information. For example, for the two messages, if the messages carry the first indication information, it indicates that the corresponding bearer is configured with the target bearer configuration information. If the messages do not carry the first indication information, it indicates that the corresponding bearer is not configured with the target bearer configuration information. The first indication message may be a configuration identifier of the target bearer configuration information, for example, a configuration ID or number of the target bearer configuration information. For example, the first indication message may be an id=28.

In addition, the first message and the second message may further include a quality of service class identifier to indicate a to-be-created or to-be-deleted bearer corresponding to the quality of service class identifier, namely, a bearer that satisfies a service type indicated by the quality of service class identifier. Quality of service class identifiers corresponding to different network standards are represented in different manners. For example, a quality of service class identifier in an LTE network may be represented by a QCI (QoS class identifier), and a quality of service class identifier in a 5G network may be represented by a 5QI (5G QoS class identifier). Different quality of service class identifier values are used to indicate different service types. The service types may include a voice call, a video call, surfing, and the like. For example, the QCI=1 and the 5QI=1 correspond to a voice call service, and the QCI=2 and the 5QI=2 correspond to a video call service.

In this embodiment of this application, quality of service class identifier values carried in a bearer creation message and a bearer deletion message may be any one of available quality of service class identifier values, that is, a service type corresponding to the quality of service class identifier may be any service type within a protocol-allowed service type range. For example, the QCI value and the 5QI may be any value in 1, 2, ..., 9. Certainly, the 5QI may alternatively be a value greater than 9. This is not limited in this embodiment of this application.

In addition, the first message and the second message may further carry a bearer identifier, and the bearer identifier is used to indicate the to-be-created or to-be-deleted bearer. Forms of bearers created in different network standards are different, and corresponding bearer identifiers are represented in different manners. For example, a bearer created in the LTE network may be a QoS flow, and a corresponding bearer identifier may be a QoS flow ID (QoS flow ID, QFI). A bearer created in the 5G network may be an EPS bearer, and a corresponding bearer identifier may be an EPS bearer ID (EPS Bearer ID, EBI).

In addition, the first message and the second message may further carry an identifier of the target bearer configuration information, for example, an ID or a number of the target bearer configuration information. Certainly, the first message and the second message may further carry other information. This is not limited in this embodiment of this application.

As an example, the UE may receive the first message sent by the network side, where the first message carries the quality of service class identifier, the bearer identifier, and the first indication information, the first message is used to indicate to create a first bearer corresponding to the quality of service class identifier, the bearer identifier is used to identify the first bearer, and the first indication information is used to indicate that the to-be-created bearer has the target bearer configuration information; sends a first response message to the network side in response to the first message, where the first response message is used to indicate to accept creation of the first bearer; receives the second message sent by the network side, where the second message carries the quality of service class identifier and the bearer identifier, the second message further carries the second indication information or the second message does not carry the first indication information and the second indication information, the second message is used to indicate to delete the first bearer corresponding to the quality of service class identifier, and the second indication information is used to indicate that the to-be-deleted bearer does not have the target bearer configuration information; and deletes the target bearer configuration information of the first bearer in response to the second message.

In this embodiment of this application, the deleting the target bearer configuration information of the first bearer in response to the second message may include the following two implementations:

In a first implementation, in response to the second message, the UE deletes the locally stored target bearer configuration information, and sends a second response message to the network side, where the second response message is used to indicate to accept deletion of the first bearer.

That is, after receiving the second message, the UE immediately deletes the locally stored target bearer configuration information, and sends the response message to the network side.

In a second implementation, in response to the second message, the UE sends a second response message to the network side; and after sending a first deletion request for one or more times to the network side, if not receiving first deletion indication information for the first deletion request, deletes the locally stored target bearer configuration information of the first bearer, where the first deletion indication information is used to indicate to delete the target bearer configuration information of the first bearer.

That is, after receiving the second message, the UE first sends the response message to the network side, and then sends the first deletion request for requesting to delete the target bearer configuration information for one or more times to the network side, to attempt to negotiate with the network side to delete the target bearer configuration information. In addition, after sending the first deletion request for one or more times to the network side, and not receiving the first deletion indication information for the first deletion request, the UE may also actively delete the locally stored bearer configuration information of the first bearer without consent of the network side, and no longer repeatedly send the first deletion request. In this way, a case in which the UE repeatedly sends the first deletion request after being rejected by the network side is avoided.

The first deletion indication information may be a third message, the third message includes the quality of service class identifier, the bearer identifier, and the first indication information, and the third message is used to indicate to delete the first bearer corresponding to the quality of service class identifier and the target bearer configuration information of the first bearer.

In an example, the second implementation may also include the following two possible implementations:
(1) A quantity of times that the UE repeatedly sends the first deletion request is controlled, to prevent the UE from repeatedly sending the first deletion request.

For example, after sending the deletion request for a preset quantity of times to the network side, if not receiving the first deletion indication information for the first deletion request, the UE deletes the locally stored bearer configuration information of the first bearer.

The preset quantity of times may be preset as required. For example, the preset quantity of times may be 2, 3, or the like. This is not limited in this embodiment of this application.

That is, the UE is only allowed to send the first deletion request for a maximum of the preset quantity of times to the network side. If the UE does not receive the first deletion indication information for the first deletion request after a quantity of times of sending the first deletion request reaches the preset quantity of times, the UE may actively delete the locally stored target bearer configuration information without consent of the network side. In this way, a case in which the UE repeatedly sends the first deletion request after being rejected by the network side can be avoided.

(2) Timing duration may be set for an operation of repeatedly sending the first deletion request by the UE, to prevent the UE from repeatedly sending the first deletion request.

Specifically, after receiving the second message, the UE starts a first timer; sends the first deletion request for one or more times to the network side within the timing duration of the first timer; and if not receiving the first deletion indication information for the first deletion request within the timing duration of the first timer, deletes the locally stored bearer configuration information of the first bearer.

The timing duration may be preset as required, for example, may be set to 5 seconds, 10 seconds, 30 seconds, or the like.

That is, the UE is only allowed to send the first deletion request within the timing duration of the first timer. If the UE does not receive the first deletion indication information for the first deletion request within the timing duration of the first timer, the UE may actively delete the locally stored target bearer configuration information without consent of the network side. In this way, a case in which the UE repeatedly sends the first deletion request after being rejected by the network side can be avoided.

It may be understood that starting the first timer after receiving the second message may include any one of the following implementations: starting the first timer in response to receiving the second message, that is, immediately starting the first timer after receiving the second message; starting the first timer when sending the second response message to the network side; starting the first timer after sending the second response message to the network side; starting the first timer when sending the first deletion request to the network side for the first time; and starting the first timer after sending the first deletion request to the network side for the first time. Certainly, the first timer may be started on another appropriate occasion after the second message is received. This is not limited in this embodiment of this application.

It may also be understood that in this embodiment of this application, only the foregoing two possible implementations are used as examples to describe the second implementation. Certainly, the second implementation may alternatively be implemented by another possible implementation. This is not limited in this embodiment of this application.

In an example, the not receiving the first deletion indication information of the network side for the first deletion request may include: receiving a deletion reject message sent by the network side, where the deletion reject message is used to indicate to reject to delete the target bearer configuration information of the first bearer; and not receiving the first deletion indication information sent by the network side,
that is, after receiving the deletion reject message sent by the network side, not receiving the first deletion indication information sent by the network side.

It should be noted that, in different network standards, the network side indicates the UE to create the bearer and delete the bearer in different message forms. For example, in the 5G network, the network side may send the PDU session modification command message to the UE to indicate the UE to create the bearer or delete the bearer. In the 4G network such as the LTE network, the network side may separately indicate the UE to create the bearer or delete the bearer by sending an active dedicated EPS bearer context request message and a deactive dedicated EPS bearer context request message to the UE.

Next, the information processing method provided in this embodiment of this application is described by using an example in which the data service is the voice call service, and the UE camps on the 5G network and is the called UE with reference to the accompanying drawings.

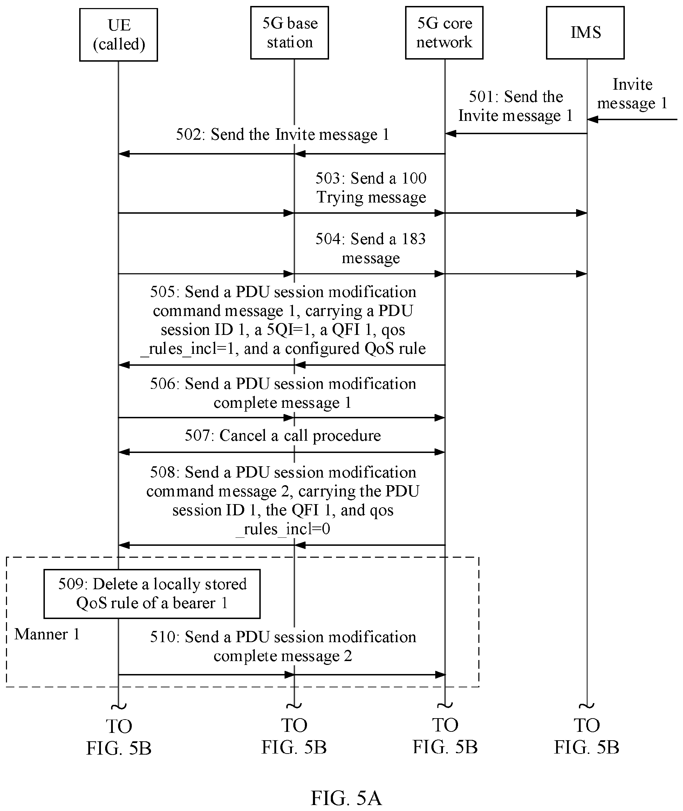

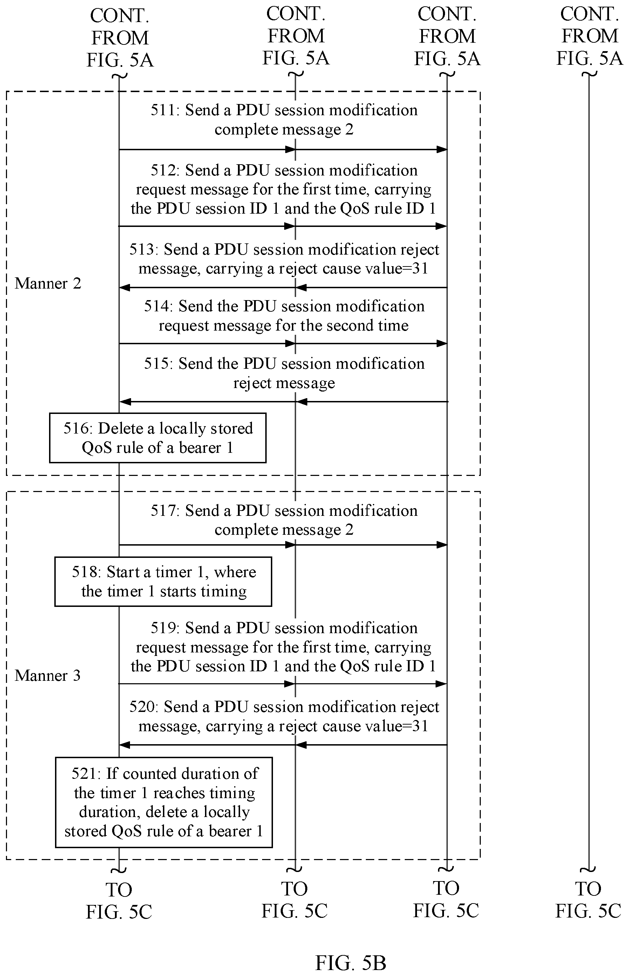

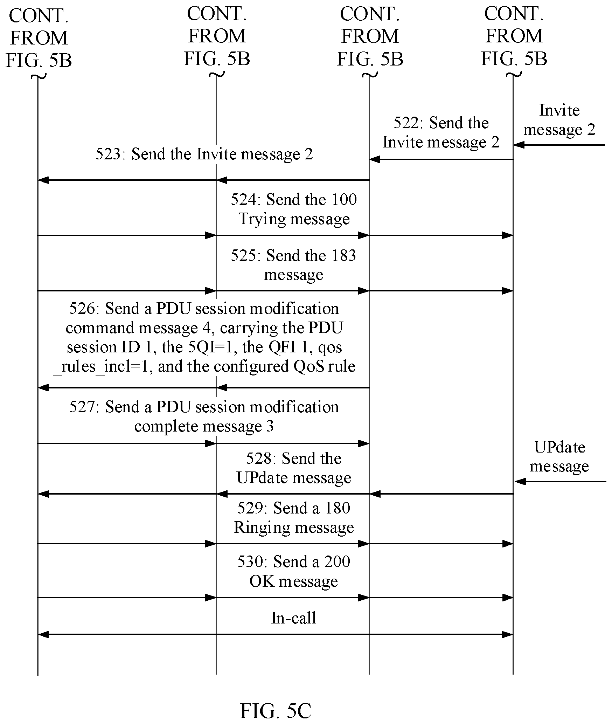

FIG. 5A to FIG. 5C are a schematic diagram of a paging procedure according to an embodiment of this application. As shown in FIG. 5A to FIG. 5C, the paging procedure includes the following content.

Step 501: After receiving an Invite message 1, an IMS sends the Invite message 1 to a 5G core network.

The Invite message is a common SIP request message, and is used to establish a session for media exchange between user agents.

It may be understood that, in response to a user operation, a calling UE may initiate a call. The calling UE may send a call request message (for example, the Invite message 1) through a calling side network (a network with which the calling UE is registered). The Invite message 1 may arrive at an I-CSCF entity in the IMS. The I-CSCF entity may query, through an HSS in the IMS, address information of an S-CSCF entity registered by a user for the UE, and then route the Invite message 1 to the S-CSCF. The S-CSCF forwards the Invite message 1 to the 5G core network registered by a called UE through a P-CSCF entity.

Step 502: The 5G core network sends the Invite message 1 to the UE through a 5G base station.

The 5G core network determines the 5G base station corresponding to the called UE, and sends the NVITE message 1 to the 5G base station; and then the 5G base station sends the NVITE message 1 to the UE.

Step 503: The UE sends a 100 Trying message to the IMS through the 5G base station and the 5G core network.

The 100 Trying message is a temporary response message, and is used to indicate that a network side UE has received the Invite message 1, and the message is being processed.

The UE sends the 100 Trying message to the 5G base station, the base station sends the 100 Trying message to the 5G core network, and then the 5G core network sends the 100 Trying message to the IMS. After receiving the 100 Trying message, the IMS may forward the 100 Trying message to the calling UE.

In addition, if the UE is in an idle state, after receiving the NVITE message 1, the UE may further first establish a radio resource control (radio resource control, RRC) connection to the 5G base station. After establishing the RRC connection to the 5G base station, the UE sends the 100 Trying message to the IMS through the 5G base station and the 5G core network.

Step 504: The UE sends a 183 message to the IMS through the 5G base station and the 5G core network.

The 183 message is used to indicate that the call is being connected.

After receiving the 183 message, the IMS may forward the 183 message to the calling UE, for example, forward the 183 message to the calling UE through the core network and the base station in the calling side network.

Step 505: The 5G core network sends a PDU session modification command message 1 to the UE through the 5G base station, where the PDU session modification command message 1 carries a PDU sessions ID 1, a 5QI=1, a QFI 1, qos _rules_incl=1, a QoS rule ID 1, and a corresponding QoS rule.

The PDU session ID 1 is used to identify a session corresponding to a to-be-created bearer 1. The 5QI=1 corresponds to a voice call service. The QFI 1 is used to identify the to-be-created bearer 1, and is specifically used to identify a QoS flow corresponding to the to-be-created bearer 1. qos _rules_incl=1 indicates that the to-be-created bearer 1 is configured with the QoS rule. The QoS rule ID 1 includes one or more QoS rule IDs, and each QoS rule ID is used to identify one QoS rule configured for the bearer 1.

The PDU session modification command message 1 is used to indicate to create the bearer 1 of the 5QI=1; and the created bearer 1 of the 5QI=1 is configured with the QoS rule.

For example, an SMF in the 5G core network establishes the PDU session modification command message 1, and sends the PDU session modification command message 1 to an AMF in the 5G core network; and the AMF sends the PDU session modification command message 1 to the called UE through the 5G base station.

Step 506: The UE sends a PDU session modification complete message 1 to the 5G core network through the 5G base station.

The PDU session modification complete message 1 is a response message for the PDU session modification command message 1, and is used to indicate to accept creation of the bearer 1 of the 5QI=1. In response to receiving the PDU session modification complete message 1, the UE may first store the QoS rule, for example, correspondingly store the PDU session ID 1, the 5QI=1, the QFI 1, the QoS rule ID 1, and the corresponding QoS rule, and then send the PDU session modification complete message 1 to the 5G base station; the 5G base station forwards the PDU session modification complete message 1 to the 5G core network, for example, sends the PDU session modification complete message 1 to the AMF in the 5G core network; and then the AMF forwards the PDU session modification complete message 1 to the SMF.

Step 507: The 5G core network cancels a call procedure between the 5G base station and the UE.

Before a call is successfully established, the network side may cancel the call procedure due to an exception. For example, the 5G core network may send a CANCEL message to the UE through the 5G base station to cancel the call procedure, and the CANCEL message is used to close a session that has not received a final response.

Step 508: The 5G core network sends a PDU session modification command message 2 to the UE through the 5G base station, where the PDU session modification command message 2 carries the PDU session ID 1, the QFI 1, and qos _rules_incl=0.

The PDU session modification command message 2 is used to indicate to delete the bearer 1 corresponding to the QFI 1, and qos _rules_incl=0 is used to indicate that the to-be-deleted bearer 1 is not configured with the QoS rule. Because an exception such as a network exception or an exception of a network element may occur in the 5G core network, in this exception, the PDU session modification command message 2 sent by the 5G core network to the UE may carry qos _rules_incl=0 instead of qos _rules_incl=1.

For example, the SMF in the 5G core network establishes the PDU session modification command message 2, and sends the PDU session modification command message 2 to the AMF in the 5G core network; and the AMF sends the PDU session modification command message 2 to the called UE through the 5G base station.

In this embodiment of this application, to resolve a problem that when the bearer of the data service is deleted, due to an exception, the network side cannot indicate the UE to delete bearer configuration information, affecting a next data service of the UE, for example, causing an exceptional call drop of the next voice call service of the UE, after receiving the PDU session modification command message 2 that carries qos _rules_incl=0 and that is used to delete the bearer, the network side also considers that qos _rules_incl=1, and deletes the locally stored QoS rule, to avoid a case in which the UE repeatedly sends a PDU session modification request for requesting to delete the QoS rule.

After receiving the PDU session modification command message 2, the UE may immediately delete the locally stored QoS rule of the bearer 1. In addition, after receiving the PDU session modification command message 2, the UE may also first send a PDU session modification request message to the network side; and after sending the PDU session modification request messages for one or more times, if not receiving a first deletion response to the PDU session modification request message, delete the locally stored QoS rule of the bearer 1.

In this embodiment of this application, any one of the following three implementations (Manner 1, Manner 2, and Manner 3) is used as an example for description to resolve the foregoing problem.

### Manner 1:

Step 509: The UE deletes the locally stored QoS rule of the bearer 1.

Step 510: The UE sends a PDU session modification complete message 2 to the 5G core network through the 5G base station.

The PDU session modification complete message 2 is a response message for the PDU session modification command message 2, and is used to indicate to accept deletion of the bearer 1.

That is, after receiving the PDU session modification command message 2, the UE may immediately delete the locally stored QoS rule of the bearer 1, and return the PDU session modification complete message to the network side.

For example, the UE sends the PDU session modification complete message 2 to the 5G base station; the 5G base station forwards the PDU session modification complete message 2 to the 5G core network, for example, sends the PDU session modification complete message 2 to the AMF in the 5G core network; and then the AMF forwards the PDU session modification complete message 2 to the SMF.

### Manner 2:

Step 511: The UE sends a PDU session modification complete message 2 to the 5G core network through the 5G base station.

Step 512: The UE sends a PDU session modification request message to the 5G core network for the first time through the 5G base station, where the PDU session modification request message carries the PDU session ID 1 and the QoS rule ID 1.

The PDU session modification request message is used to request to delete the QoS rule corresponding to the QoS rule ID 1, namely, the QoS rule of the bearer 1.

That is, after receiving the PDU session modification command message 2, the UE first sends the PDU session modification complete message 2 to the network side, sends the PDU session modification request message for the first time to the network side, and attempts to negotiate with the network side to delete the QoS rule of the bearer 1 by sending the PDU session modification request message.

For example, the UE sends the PDU session modification request message to the AMF in the 5G core network, and then the AMF forwards the PDU session modification request message to the SMF.

Step 513: The 5G core network sends a PDU session modification reject message to the UE through the 5G base station, where the PDU session modification reject message carries a reject cause value=31.

The PDU session modification reject message is used to indicate to reject a PDU session modification request of the UE. The reject cause value 31 "cause=31" is used to indicate an ambiguous cause. Because an exception occurs on the network side, it may be considered that the PDU session modification command message 2 is used to indicate the UE to delete the QoS rule of the bearer 1, and reject the PDU session modification request of the UE.

For example, the SMF in the 5G core network sends the PDU session modification reject message to the UE through the AMF.

Step 514: The UE sends the PDU session modification request message to the 5G core network for the second time through the 5G base station.

After being rejected by the network side, the UE may resend the PDU session modification request message to the 5G core network.

Step 515: The 5G core network sends the PDU session modification reject message to the UE through the 5G base station.

Step 516: The UE deletes the locally stored QoS rule of the bearer 1.

In this embodiment of this application, after sending the PDU session modification request message for a preset quantity (that is, 2) to the network side, if not receiving the first indication information for the PDU session modification reject message, for example, not receiving a PDU session modification command message 3 from the 5G core network, the locally stored QoS rule of the bearer 1 may be deleted. The PDU session modification command message 3 carries the ID 1, the 5QI=1, the QFI 1, qos _rules_incl=1, the QoS rule 1, and the corresponding QoS rule, and is used to indicate to delete the bearer 1 of the 5QI=1.

It should be noted that Manner 2 is merely described by using an example in which the preset quantity of times is 2. In another embodiment, the preset quantity of times may alternatively be set to another value. This is not limited in this embodiment of this application.

### Manner 3:

Step 517: The UE sends a PDU session modification complete message 2 to the 5G core network through the 5G base station.

Step 518: After sending the PDU session modification complete message 2, the UE starts a timer 1, where the timer 1 starts timing.

Step 519: The UE sends a PDU session modification request message to the 5G core network for the first time through the 5G base station, where the PDU session modification request message carries the PDU session ID 1 and the QoS rule ID 1.

Step 520: The 5G core network sends a PDU session modification reject message to the UE through the 5G base station, where the PDU session modification reject message carries a reject cause value=31.

Step 521: If counted duration of the timer 1 reaches timing duration of the timer 1, the UE deletes the locally stored QoS rule of the bearer 1.

It should be noted that in this embodiment of this application, that the UE starts the timer 1 after sending the PDU session modification complete message 2 to the network side is merely used as an example for description. It should be understood that the UE may alternatively start the timer 1 on another occasion after receiving the PDU session modification command message 2, for example, start the timer 1 after step 508 and before step 517, or start the timer 1 after step 519. This is not limited in this embodiment of this application.

Step 522: After receiving an Invite message 2, the IMS sends the Invite message 2 to the 5G core network.

After the UE deletes the locally stored QoS rule of the bearer 1 of the 5QI=1, the called UE may receive an incoming call again, that is, the called UE is called again. In this case, the IMS may receive the Invite message 2 sent by the calling UE through the calling side network. After receiving the Invite message 2, the IMS may send the Invite message 2 to the 5G core network.

It should be noted that the calling UE of the first voice call service and the calling UE of the second voice call service may be a same UE, or may be different UEs. This is not limited in this embodiment of this application.

Step 523: The 5G core network sends the Invite message 2 to the UE through the 5G base station.

Step 524: The UE sends a 100 Trying message to the IMS through the 5G base station and the 5G core network.

In addition, after the UE receives the NVITE message 2, if the UE is in an idle state, the UE may further first establish an RRC connection to the 5G base station. After establishing the RRC connection to the 5G base station, the UE sends the 100 Trying message to the IMS through the 5G base station and the 5G core network. After receiving the 100 Trying message, the IMS may forward the 100 Trying message to the calling UE, for example, forward the 100 Trying message to the calling UE through the core network and the base station in the calling side network.

Step 525: The UE sends a 183 message to the IMS through the 5G base station and the 5G core network.

After receiving the 183 message, the IMS may forward the 183 message to the calling UE, for example, forward the 183 message to the calling UE through the core network and the base station in the calling side network.

Step 526: The 5G core network sends a PDU session modification command message 4 to the UE through the 5G base station, where the PDU session modification command message 4 carries the PDU sessions ID 1, the 5QI=1, the QFI 1, qos _rules_incl=1, the QoS rule ID 1, and the corresponding QoS rule.

The PDU session modification command message 4 is used to indicate to create a bearer 2 of the 5QI=1, namely, the bearer 2 used to carry the voice call data of the second voice call service. The PDU session ID 1 is used to identify a session corresponding to the to-be-created bearer 2. The 5QI=1 corresponds to the voice call service. The QFI 1 is used to identify the to-be-created bearer 2, and is specifically used to identify a QoS flow corresponding to the to-be-created bearer 2. qos _rules_incl=1 indicates that the to-be-created bearer 2 is configured with the QoS rule. The QoS rule ID 1 includes one or more QoS rule IDs, and each QoS rule ID is used to identify one QoS rule configured for the bearer 2.

For example, the SMF in the 5G core network establishes the PDU session modification command message 4, and sends the PDU session modification command message 4 to the AMF in the 5G core network; and the AMF sends the PDU session modification command message 4 to the called UE through the 5G base station.

Step 527: The UE sends a PDU session modification complete message 3 to the 5G core network through the 5G base station.

The PDU session modification complete message 3 is a response message for the PDU session modification command message 4, and is used to indicate to accept creation of the bearer 2. In response to receiving the PDU session modification complete message 4, the UE may first store the QoS rule of the bearer 2, for example, correspondingly store the PDU session ID 1, the QFI 1, the QoS rule ID 1, and the corresponding QoS rule, and then send the PDU session modification complete message 3 to the 5G base station; the 5G base station forwards the PDU session modification complete message 3 to the 5G core network, for example, sends the PDU session modification complete message 3 to the AMF in the 5G core network; and then the AMF forwards the PDU session modification complete message 3 to the SMF.

Step 528: After receiving an update (UPdate) message, the IMS sends the UPdate message to the UE through the 5G core network and the 5G base station.

The UPdate message is used to indicate to perform resource reservation, and the UPdate message may carry a resource reservation state.

The calling UE may send the UPdate message to the called UE through the calling side network. After the UPdate message arrives at the IMS, the IMS sends the UPdate message to the 5G core network, and the 5G core network sends the UPdate message to the called UE through the 5G base station.

Step 529: The UE sends a 180 Ringing message to the IMS through the 5G base station and the 5G core network.

The 180 Ringing is used to indicate that the called UE has rung, indicating that Invite message 2 has been sent to the called UE, and the called UE has rung.

After receiving the UPdate message, the UE may ring, and send the 180 Ringing message to the IMS through the 5G base station and the 5G core network after ringing. After receiving the 180 Ringing message, the IMS may forward the 180 Ringing message to the calling UE, for example, forward the 180 Ringing message to the calling UE through the core network and the base station in the calling side network.

Step 530: The UE sends a 200 OK message to the IMS through the 5G base station and the 5G core network.

The 200 OK message is a final response for the Invite message 2, and is used to indicate that a content part of an SDP is switched over. Then, the UE may make a call with the calling UE through the network side, that is, make a call with the calling UE through the 5G base station, the 5G core network, and the IMS.

It should be noted that, this embodiment of this application is merely described by using an example in which the network side sends the exceptional PDU session modification command message 2 to the UE after the call is canceled due to an exception before the call has not been successfully established for the first voice call service. It should be understood that the network side may also send the exceptional PDU session modification command message 2 to the UE after the call has been successfully established for the first voice call service, and the call ends based on an end call operation of the user. A scenario in which the network side sends the exceptional PDU session modification command message to the UE is not limited in this embodiment of this application.

It may be understood that this embodiment of this application is merely described by using an example in which the UE is a called UE. However, when in which the UE is a calling UE, a case in which the network side sends the exceptional PDU session modification command message 2 to the UE may also occur. In this process, the information processing method provided in the example of this application may also be used to resolve the foregoing problem. For example, step 501 to step 504 may alternatively be replaced with the following step: The UE sends the Invite message 1 to the IMS through the 5G base station and the 5G core network. After receiving the 100 Trying message, the IMS sends the 100 Trying message to the UE through the 5G core network and the 5G base station. Correspondingly, step 522 to step 530 may alternatively be replaced with the following step: The UE sends the Invite message 2 to the IMS through the 5G base station and the 5G core network. After receiving the 100 Trying message, the IMS sends the 100 Trying message to the UE through the 5G core network and the 5G base station. After receiving the 183 message, the IMS sends the 183 message to the UE through the 5G core network and the 5G base station. The 5G core network sends the PDU session modification command message 4 to the UE through the 5G base station. The UE sends the PDU session modification complete message 3 to the 5G core network through the 5G base station. The UE sends the UPdate message to the IMS through the 5G base station and the 5G core network. After receiving the 180 Ringing message, the IMS sends the 180 Ringing message to the UE through the 5G core network and the 5G base station. After receiving the 200 OK message, the IMS sends the 200 OK message to the UE through the 5G core network and the 5G base station. After receiving the 200 OK message, the UE may make a call with the called UE through the network side, that is, make a call with the called UE through the 5G base station, the 5G core network, and the IMS.

In this embodiment of this application, after the UE receives the PDU session modification command message 1 that is sent by the network side and that carries qos _rules_incl=1 and is used to indicate to create the bearer, if the UE receives the PDU session modification command message 2 used to indicate to delete the bearer, even if the PDU session modification command message 2 carries qos _rules_incl=0, the UE also considers qos _rules_incl=1, and deletes the locally stored QoS rule. In this way, when the network side cannot indicate the UE to delete the QoS rule due to an exception, a case in which the UE repeatedly sends the PDU session modification request message for requesting to delete the QoS rule can be avoided, so that a problem that a next voice call service is exceptionally dropped by mistakenly deleting the bearer of the next voice call service by the network side because the UE repeatedly sends the PDU session modification request message can be avoided. In this way, normal execution of the next voice call service can be ensured, thereby reducing impact on the UE service when the network exception occurs, improving stability and reliability of the voice call service, and further improving user experience.

It should be noted that, in different network standards, the network side indicates the UE to create the bearer and delete the bearer in different message forms. Next, the information processing method provided in this embodiment of this application is described by using an example in which the data service is the voice call service, and the UE camps on the 4G network such as the LTE network and is the calling UE with reference to the accompanying drawings.

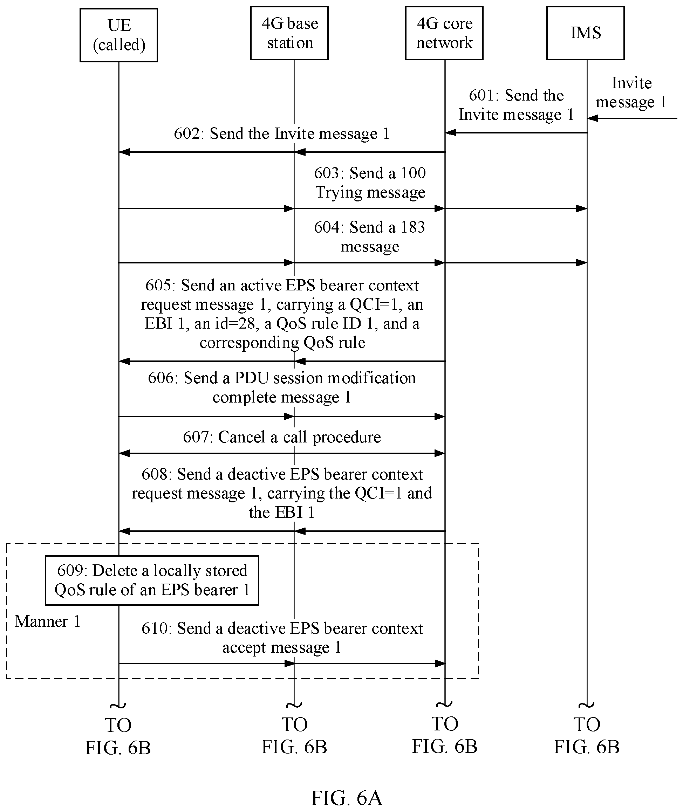

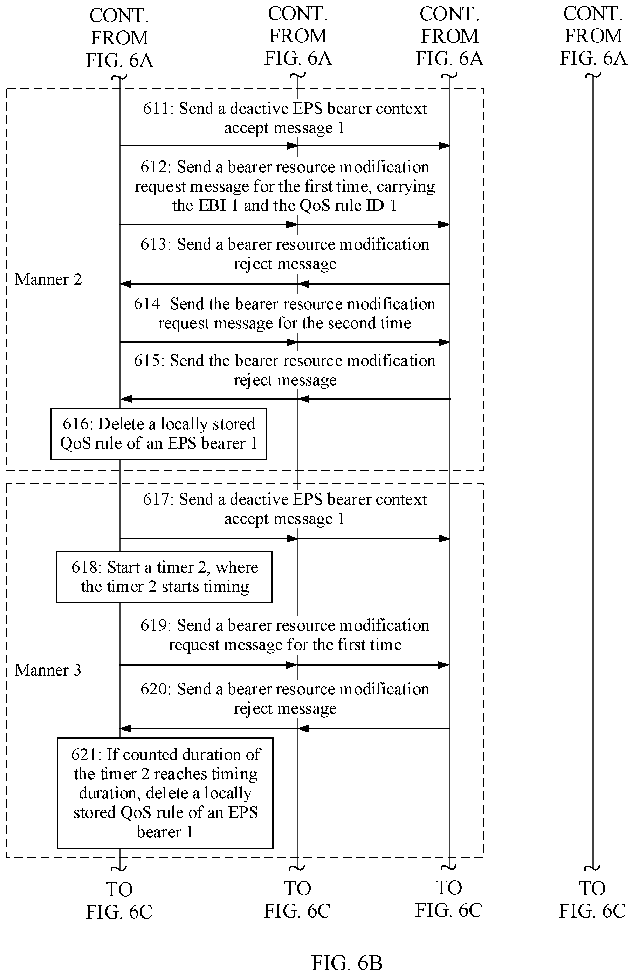

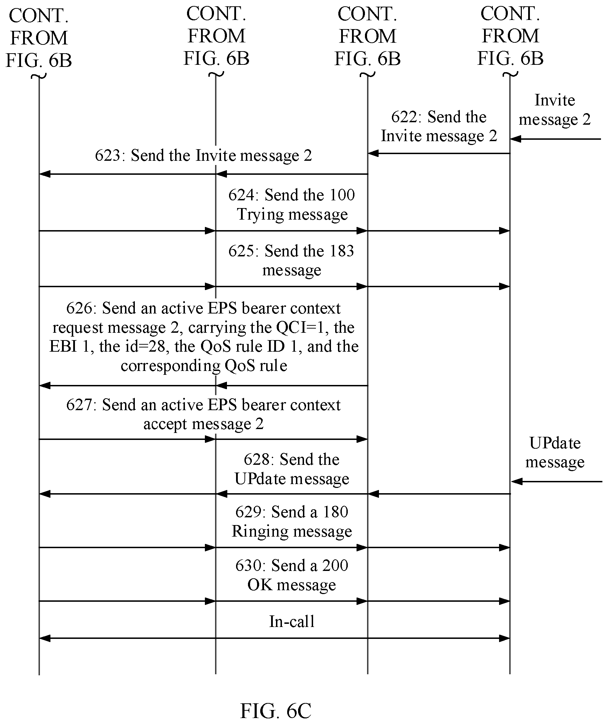

FIG. 6A to FIG. 6C are a schematic diagram of another paging procedure according to an embodiment of this application. As shown in FIG. 6A to FIG. 6C, the paging procedure includes the following content.

Step 601: After receiving an Invite message 1, an IMS sends the Invite message 1 to a 4G core network.

Step 602: The 4G core network sends the Invite message 1 to a UE through a 4G base station.

Step 603: The UE sends a 100 Trying message to the IMS through the 4G base station and the 4G core network.

Step 604: The UE sends a 183 message to the IMS through the 4G base station and the 4G core network.

An implementation of step 601 to step 604 is the same as that of step 501 to step 504 in the foregoing embodiment in FIG. 5A to FIG. 5C. Details are not described herein again in this embodiment of this application.

Step 605: The 4G core network sends an active dedicated EPS bearer context request (active dedicated EPS bearer context request) message 1 to the UE through the 4G base station, where the active dedicated EPS bearer context request message 1 carries a QCI=1, an EBI 1, an id=28, a QoS rule ID 1, and a corresponding QoS rule.

The active dedicated EPS bearer context request message 1 is used to indicate to create an EPS bearer 1 of the QCI=1, namely, the EPS bearer 1 used to carry voice call service data. The EBI 1 is used to identify the EPS bearer 1. The id=28 is used to indicate that the EPS bearer 1 is configured with the QoS rule. The QoS rule ID 1 may include one or more QoS rule IDs, and each QoS rule ID is used to indicate one QoS rule configured for the EPS bearer 1.

An MME in the 4G core network may create the active dedicated EPS bearer context request message 1, and send the dedicated EPS bearer context request message 1 to the 4G base station through an SGW and a PGW, to send the dedicated EPS bearer context request message 1 to the UE through the 4G base station.

Step 606: The UE sends an active dedicated EPS bearer context accept (active dedicated EPS bearer context accept) message 1 to the 4G core network through the 4G base station.

The active dedicated EPS bearer context accept message 1 is a response message for the active dedicated EPS bearer context request message 1, and is used to indicate to accept creation of the EPS bearer 1. The UE may send the EPS bearer context request message 1 to the 4G core network through the 4G base station. The EPS bearer context accept message 1 may arrive at the PGW in the 4G core network, the PGW forwards the EPS bearer context accept message 1 to the SGW, and then the SGW sends the EPS bearer context accept message 1 to the MME.

Step 607: The 4G core network cancels a call procedure between the 4G base station and the UE.

Step 608: The 4G core network sends a deactive dedicated EPS bearer context request (deactive dedicated EPS bearer context request) message 1 to the UE through the 4G base station, where the deactive dedicated EPS bearer context request message 1 carries the QCI=1 and the EBI 1.

The deactive dedicated EPS bearer context request message 1 is used to indicate to delete the EPS bearer 1. In addition, the deactive dedicated EPS bearer context request message 1 does not carry the id=28. In this case, it may indicate that the EPS bearer 1 is not configured with the QoS rule. In addition, the deactive dedicated EPS bearer context request message 1 may also not carry the QCI=1. This is not limited in this embodiment of this application.

For example, the MME in the 4G core network establishes the deactive dedicated EPS bearer context request message 1, and sends the deactive dedicated EPS bearer context request message 1 to an SGW in a 5G core network, and then the SGW sends the deactive dedicated EPS bearer context request message 1 to a 5G base station through the PGW, to send the deactive dedicated EPS bearer context request message 1 to the called UE through the 5G base station.

In a normal case, the active dedicated EPS bearer context request message 1 carries the id=28 and the corresponding QoS rule ID 1. The corresponding deactive dedicated EPS bearer context request message 1 also carries the id=28 and the corresponding QoS rule ID 1. However, because an exception such as a network exception or an exception of a network element may occur in the 4G core network, in this exception, the deactive dedicated EPS bearer context request message 1 sent by the 4G core network to the UE may not carry the id=28 and the corresponding QoS rule ID 1.

In this embodiment of this application, to resolve a problem that when the bearer of the data service is deleted, due to an exception, the network side cannot indicate the UE to delete bearer configuration information, affecting a next data service of the UE, for example, causing an exceptional call drop of the next voice call service of the UE, after receiving the deactive dedicated EPS bearer context request message 1 that does not carry the id=28 and the corresponding QoS rule ID 1 and that is used to indicate to delete the bearer, the UE also considers that the deactive dedicated EPS bearer context request message 1 carries the id=28 and the corresponding QoS rule ID 1, and deletes the locally stored QoS rule of the EPS bearer 1, to avoid a case in which the UE repeatedly sends a deletion request for requesting to delete the QoS rule.

After receiving the deactive dedicated EPS bearer context request message 1, the UE may immediately delete the locally stored QoS rule of the EPS bearer 1. In addition, after receiving the active dedicated EPS bearer context request message 1, the UE may first send, to the network side, a bearer resource modification request (bearer resource modification request) message that is used to request to delete the QoS rule of the EPS bearer 1. After sending the bearer resource modification request for one or more times, if not receiving a first deletion response for a PDU session modification request message, the UE deletes the locally stored QoS rule of the EPS bearer 1.

In this embodiment of this application, the following three implementations (Manner 1, Manner 2, and Manner 3) are used as examples for description to resolve the foregoing problem.

### Manner 1:

Step 609: The UE deletes the locally stored QoS rule of the EPS bearer 1.

Step 610: The UE sends a deactive dedicated EPS bearer context accept (deactive dedicated EPS bearer context accept) message 1 to the 4G core network through the 4G base station.

The deactive dedicated EPS bearer context accept message 1 is a response message for the deactive dedicated EPS bearer context request message 1, and is used to indicate to accept deletion of the EPS bearer 1. The deactive dedicated EPS bearer context request message 1 may be established and sent by the MME in the 4G core network, and a sending path of the deactive dedicated EPS bearer context request message 1 is the same as a sending path of the active dedicated EPS bearer context accept message 1. Details are not described herein again in this embodiment of this application.

That is, after receiving the deactive dedicated EPS bearer context request message 1, the UE immediately deletes the locally stored QoS rule of the EPS bearer 1, and returns the deactive dedicated EPS bearer context accept message to the network side.

### Manner 2:

Step 611: The UE sends a deactive dedicated EPS bearer context accept message 1 to the 4G core network through the 4G base station.

Step 612: The UE sends a bearer resource modification request message for the first time to the 4G core network through the 4G base station, where the bearer resource modification request message carries the EBI 1 and the QoS rule ID 1.

The bearer resource modification request message is used to request to delete the QoS rule of the EPS bearer 1. In addition, the bearer resource modification request message may further carry the QCI=1. This is not limited in this embodiment of this application.

Step 613: The 4G core network sends a bearer resource modification reject (bearer resource modification reject) message to the UE through the 4G base station.

The bearer resource modification reject message is a reject response for the bearer resource modification request message, and is used to indicate to reject to delete the QoS rule of the EPS bearer 1.

In addition, the bearer resource modification reject message may further carry reject cause indication information, and the reject cause indication information is used to indicate an ambiguous cause. For example, the reject cause indication information may be a reject cause value, and the reject cause value is used to indicate the ambiguous cause. For example, the reject cause value=31.

Step 614: The UE sends a modification EPS bearer context request message for the second time to the 4G core network through the 4G base station.

Step 615: The 4G core network sends the bearer resource modification reject message to the UE through the 4G base station.

Step 616: The UE deletes the locally stored QoS rule of the EPS bearer 1.

It should be noted that, after sending the bearer resource modification request message for a preset quantity (that is, 2) to the network side, if not receiving first deletion indication information for the bearer resource modification request, for example, not receiving a deactive dedicated EPS bearer context request message 2 from the 4G core network, the locally stored QoS rule of the EPS bearer 1 may be deleted. The deactive dedicated EPS bearer context request message 2 carries the QCI=1, the EBI 1, the id=28, and the corresponding QoS rule ID 1. The deactive dedicated EPS bearer context request message 2 is used to indicate to delete the EPS bearer 1 and the QoS rule of the EPS bearer 1.

It may be understood that Manner 2 is the same as Manner 2 in the embodiment in FIG. 5A to FIG. 5C. For a specific implementation principle, refer to related descriptions of Manner 2 in the embodiment in FIG. 5A to FIG. 5C. Details are not described herein again in this embodiment of this application.

### Manner 3:

Step 617: The UE sends a deactive dedicated EPS bearer context accept message 1 to the 4G core network through the 4G base station.

Step 618: The UE starts a timer 2, where the timer 2 starts timing.

Step 619: The UE sends a bearer resource modification request for the first time to the 4G core network through the 4G base station, where the bearer resource modification request message carries the EBI 1, the id=28, and the QoS rule ID 1.

Step 620: The 4G core network sends a bearer resource modification reject message to the UE through the 4G base station.

Step 621: If counted duration of the timer 2 reaches timing duration of the timer 2, the UE deletes the locally stored QoS rule of the EPS bearer 1.

It should be noted that in this embodiment of this application, that the UE starts the timer 2 after sending the deactive dedicated EPS bearer context accept message to the network side is merely used as an example for description. It should be understood that the UE may alternatively start the timer 2 on another occasion after receiving the deactive dedicated EPS bearer context request message 1, for example, start the timer 2 after step 608 and before step 617, or start the timer 2 after step 619. This is not limited in this embodiment of this application.

It may be understood that Manner 3 is the same as Manner 3 in the embodiment in FIG. 5A to FIG. 5C. For a specific implementation principle, refer to related descriptions of Manner 3 in the embodiment in FIG. 5A to FIG. 5C. Details are not described herein again in this embodiment of this application.

Step 622: After receiving an Invite message 2, the IMS sends the Invite message 2 to the 4G core network.

Step 623: The 4G core network sends the Invite message 2 to the UE through the 4G base station.

Step 624: The UE sends a 100 Trying message to the IMS through the 4G base station and the 4G core network.

Step 625: The UE sends a 183 message to the IMS through the 4G base station and the 4G core network.

Step 626: The 4G core network sends an active dedicated EPS bearer context request message 2 to the UE through the 4G base station, where the active dedicated EPS bearer context request message 2 carries the QCI=1, the EBI 1, the id=28, the QoS rule ID 1, and the corresponding QoS rule.

The active dedicated EPS bearer context request message 2 is used to indicate to create an EPS bearer 2 of the QCI=1, namely, the EPS bearer 2 used to carry second voice call service data. The EBI 1 is used to identify the EPS bearer 2. The id=28 is used to indicate that the EPS bearer 2 is configured with the QoS rule. The QoS rule ID 1 may include one or more QoS rule IDs, and each QoS rule ID is used to indicate one QoS rule configured for the EPS bearer 2.

Step 627: The UE sends an active dedicated EPS bearer context accept message 2 to the 4G core network through the 4G base station.

The active dedicated EPS bearer context accept message 2 is a response message for the active dedicated EPS bearer context request message 2, and is used to indicate to accept creation of the EPS bearer 2.

Step 628: After receiving an UPdate message, the IMS sends the UPdate message to the UE through the 4G core network and the 4G base station.

Step 629: The UE sends a 180 Ringing message to the IMS through the 4G base station and the 4G core network.

Step 630: The UE sends a 200 OK message to the IMS through the 4G base station and the 4G core network.

Then, the UE may make a call with the calling UE through the network side, that is, make a call with the calling UE through the 4G base station, the 4G core network, and the IMS.

It may be understood that this embodiment of this application is merely described by using an example in which the UE is a called UE. However, when in which the UE is a calling UE, a case in which the network side sends the exceptional deactive dedicated EPS bearer context request message 1 to the UE may also occur. In this process, the information processing method provided in the example of this application may also be used to resolve the foregoing problem. For example, step 601 to step 604 may alternatively be replaced with the following step: The UE sends the Invite message 1 to the IMS through the 4G base station and the 4G core network. After receiving the 100 Trying message, the IMS sends the 100 Trying message to the UE through the 4G core network and the 4G base station. Correspondingly, step 622 to step 630 may alternatively be replaced with the following step: The UE sends the Invite message 2 to the IMS through the 4G base station and the 4G core network. After receiving the 100 Trying message, the IMS sends the 100 Trying message to the UE through the 4G core network and the 4G base station. After receiving the 183 message, the IMS sends the 183 message to the UE through the 4G core network and the 4G base station. The 4G core network sends the PDU session modification command message 4 to the UE through the 4G base station. The UE sends the PDU session modification complete message 3 to the 4G core network through the 4G base station. The UE sends the UPdate message to the IMS through the 4G base station and the 4G core network. After receiving the 180 Ringing message, the IMS sends the 180 Ringing message to the UE through the 4G core network and the 4G base station. After receiving the 200 OK message, the IMS sends the 200 OK message to the UE through the 4G core network and the 4G base station. After receiving the 200 OK message, the UE may make a call with the called UE through the network side, that is, make a call with the called UE through the 4G base station, the 4G core network, and the IMS.

In addition, an operating system runs on the foregoing terminal device, for example, the terminal device shown in FIG. 3, for example, an iOS operating system developed by Apple Inc., an Android open-source operating system developed by Google Inc., or a Windows operating system developed by Microsoft Corporation.

The operating system of the terminal device may use a layered architecture, an event-driven architecture, a microkernel architecture, a microservice architecture, or a cloud architecture. In the embodiments of this application, an Android system of a layered architecture is used as an example to describe software and hardware structures of the terminal device. It should be noted that although the Android system is used as an example for description in the embodiments of this application, a basic principle thereof is also applicable to a terminal device based on an operating system such as iOS or Windows.

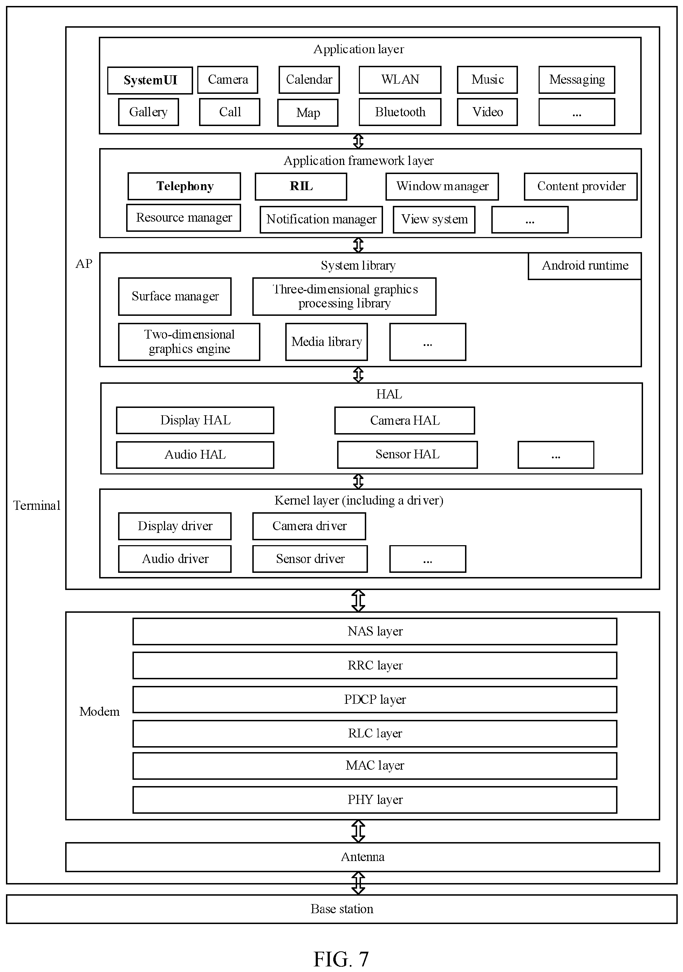

FIG. 7 is a block diagram of a software structure of a terminal device according to an embodiment of this application. The software structure uses a layered architecture. In the layered architecture, software is divided into several layers, and each layer has a clear role and task. Layers communicate with each other through a software interface. The Android system and the Android system running on an AP are used as an example. In some embodiments, the Android system is divided into five layers: an application layer, an application framework layer (Framework), Android runtime (Android runtime) and a system library, a hardware abstraction layer (HAL), and a system kernel layer (Kernel) from top to bottom.

The application layer may include a series of application packages. The application packages may include APPs such as Camera, Gallery, Calendar, Call, Map, Navigation, WLAN, Bluetooth, Music, Video, and Messages. The application layer may further include a systemUI (systemUI), and the systemUI is used for displaying an interface of the terminal device, for example, displaying a signal icon corresponding to a SIM card, displaying a call interface, and the like. The application framework layer provides an application programming interface (Application Programming Interface, API) and a programming framework for the applications at the application layer. The application framework layer includes some predefined functions. For example, the application framework layer may include a window manager, a content provider, a view system, a phone manager, a resource manager, a notification manager, and the like. The phone manager is configured to provide a call function of the terminal device, for example, management of a call status (including answering, declining, or the like). The application framework layer may further include a RIL (Radio Interface Layer, radio interface layer), and a modem (modem) may exchange information with the telephony through the RIL.

The modem may include a NAS (Non-Access Stratum, non-access stratum) layer, an RRC (radio resource control, radio resource control) layer, a packet data convergence protocol (Packet Data Convergence Protocol, PDCP) layer, a radio link control (Radio Link Control, RLC) layer, a medium access control (Medium Access Control Layer, MAC) layer, and a physical (Physical, PHY) layer. The foregoing layers may be software modules. The modem may interact with a base station through an antenna. The method provided in the embodiments of this application may be implemented by the modem.

In addition, some embodiments of this application provide a terminal device. The terminal device includes one or more processors and a memory. The memory is configured to store computer program code. The computer program code includes computer instructions. When the one or more processors execute the computer instructions, the terminal device performs the foregoing information processing method.

Some embodiments of this application provide a chip system, applied to a terminal device. The chip system includes at least one processor and an interface. The interface is configured to receive instructions, and transmit the instructions to the at least one processor. The at least one processor runs the instructions, so that the terminal device performs the foregoing paging message processing method. The chip system may be a modem, or may include a system on chip (System on Chip, Soc) of the modem. The foregoing method may be implemented by one modem.

All or some of the foregoing embodiments may be implemented by software, hardware, firmware, or any combination thereof. When software is used to implement the embodiments, all or some of the embodiments may be implemented in the form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by the computer, or a data storage device such as a server or a data center integrating one or more usable media. The usable medium may be a magnetic medium (for example, a floppy disk, a hard disk, or a magnetic tape), an optical medium (for example, a digital versatile disc (Digital Versatile Disc, DVD)), a semiconductor medium (for example, a solid state disk (Solid State Disk, SSD)), or the like.

The foregoing descriptions are optional embodiments provided in this application, but are not intended to limit this application. Any modification, equivalent replacement, improvement, or the like made within the technical scope disclosed in this application shall fall within the protection scope of this application.

## Claims

1. An information processing method, applied to a terminal device, wherein the method comprises:
receiving a first message sent by a network side, wherein the first message carries a quality of service class identifier, a bearer identifier, and first indication information, the first message is used to indicate to create a first bearer corresponding to the quality of service class identifier, the bearer identifier is used to identify the first bearer, and the first indication information is used to indicate that a to-be-created bearer has target bearer configuration information;
sending a first response message to the network side in response to the first message, wherein the first response message is used to indicate to accept creation of the first bearer;
receiving a second message sent by the network side, wherein the second message carries the quality of service class identifier and the bearer identifier, the second message further carries second indication information or the second message does not carry the first indication information and the second indication information, the second message is used to indicate to delete the first bearer corresponding to the quality of service class identifier, and the second indication information is used to indicate that the to-be-deleted bearer does not have the target bearer configuration information; and
deleting the target bearer configuration information of the first bearer in response to the second message.

2. The method according to claim 1, wherein the deleting the target bearer configuration information of the first bearer in response to the second message comprises:
in response to the second message, deleting the locally stored target bearer configuration information of the first bearer, and sending a second response message to the network side, wherein the second response message is used to indicate to accept deletion of the first bearer.

3. The method according to claim 1, wherein the deleting the target bearer configuration information of the first bearer in response to the second message comprises:
sending a second response message to the network side in response to the second message, wherein the second response message is used to indicate to accept deletion of the first bearer; and
after sending a first deletion request for one or more times to the network side, if not receiving first deletion indication information for the first deletion request, deleting the locally stored target bearer configuration information of the first bearer, wherein the first deletion indication information is used to indicate to delete the target bearer configuration information of the first bearer.

4. The method according to claim 3, wherein sending the first deletion request for one or more times to the network side comprises sending the first deletion request message for a preset quantity of times to the network side.

5. The method according to claim 3, wherein the method further comprises:
starting a first timer after receiving the second message;
the sending a first deletion request for one or more times to the network side comprises:
sending the first deletion request for one or more times to the network side within timing duration of the first timer; and
the not receiving first deletion indication information for the first deletion request comprises:
if not receiving the first deletion indication information for the first deletion request within the timing duration of the first timer, deleting the locally stored target bearer configuration information of the first bearer.

6. The method according to any one of claims 3 to 5, wherein the not receiving first deletion indication information for the first deletion request comprises:
receiving a deletion reject message sent by the network side, wherein the deletion reject message is used to indicate to reject to delete the target bearer configuration information of the first bearer; and
not receiving the first deletion indication information, for the first deletion request, sent by the network side.

7. The method according to any one of claims 1 to 6, wherein
when in which the terminal device camps on a 5th generation 5G network, the quality of service class identifier is a quality of service class identifier 5QI in the 5G network, the first message and the second message are protocol data unit PDU session modification command messages, and the first response message is a PDU session modification complete message; and
when in which the terminal device camps on a long term evolution LTE network, the quality of service class identifier is a quality of service class identifier QCI in the LTE network, the first message is an active dedicated evolved packet system EPS bearer context request message, the first response message is an active dedicated EPS bearer context accept message, and the second message is a deactive dedicated EPS bearer context request message.

8. The method according to any one of claims 3 to 5, wherein
when in which the terminal device camps on a 5G network, the second response message is a PDU session modification complete message, and the first deletion request is a PDU session modification request message; and
when in which the terminal device camps on an LTE network, the second response message is a deactive dedicated EPS bearer context accept message, and the first deletion request is a modification EPS bearer context request message.

9. The method according to claim 8, wherein when in which the terminal device camps on the 5G network, the first message and the second message further comprise a PDU session identifier, the PDU session modification request message comprises the PDU session identifier, and the PDU session identifier is used to identify a session corresponding to the first bearer.

10. The method according to claim 6, wherein
when in which the terminal device camps on a 5G network, the deletion reject message is a PDU session modification reject message, and the first deletion indication information is a PDU session modification command message; and
when in which the terminal device camps on an LTE network, the deletion reject message is a bearer resource modification reject message, and the first deletion indication information is a deactive dedicated EPS bearer context request message.

11. The method according to any one of claims 1 to 10, wherein the target bearer configuration information comprises one or more of the following information: a quality of service QoS rule, EPS bearer context mapping information, and QoS flow description information.

12. The method according to any one of claims 1 to 11, wherein the first indication information is a bearer configuration identifier whose identifier value is a first identifier value, the second indication information is a bearer configuration identifier whose identifier value is a second identifier value, and the bearer configuration identifier is used to indicate whether the corresponding bearer has the target bearer configuration information.

13. The method according to any one of claims 1 to 12, wherein a service type indicated by the quality of service class identifier is a voice call service or a video call service; and before the receiving a first message sent by a network side, the method further comprises any one of the following manners:
sending a first invite Invite message to the network side; receiving a first temporary response message sent by the network side; and receiving a first session ongoing message sent by the network side, wherein the first session ongoing message is used to indicate that a call is being connected; and
receiving a second Invite message sent by the network side; sending a second temporary response message to the network side in response to the second Invite message; and sending a second session ongoing message to the network side.

14. A terminal device, wherein the terminal device comprises a memory, a processor, and a computer program that is stored in the memory and that is runnable on the processor; and when the computer program is executed by the processor, the method according to any one of claims 1 to 13 is implemented.

15. A chip system, wherein the chip system comprises one or more interface circuits and one or more processors, and the interface circuit and the processor are interconnected through a line; and
the chip system is applied to a terminal device comprising a communication module and a memory, the interface circuit is configured to receive a signal from the memory and send the signal to the processor, and the signal comprises computer instructions stored in the memory; and when the processor executes the computer instructions, the terminal device performs the method according to any one of claims 1 to 13.
